# EUROPÄISCHE PATENTSCHRIFT

(11) **EP 2 547 720 B1**
(45) Veröffentlichungstag und Bekanntmachung des Hinweises auf die Patenterteilung: **02.05.2018**
(21) Anmeldenummer: 11708223.0
(22) Anmeldetag: 02.03.2011
(51) Int. Cl.: C08J 7/04, C09D 1/00, B01J 35/00, B01J 37/02, B05D 7/00, B01J 21/06

(54) **BESCHICHTETES FLÄCHIGES KUNSTSTOFFMATERIAL MIT REDUZIERTER NEIGUNG ZUR VERALGUNG, VERFAHREN ZU DESSEN IN LINIE HERSTELLUNG SOWIE VERWENDUNG**
COATED SHEET-LIKE PLASTIC MATERIAL WITH REDUCED TENDENCY TO COLONIZATION BY ALGAE, PROCESS FOR THE IN-LINE PRODUCTION THEREOF AND USE
MATÉRIAU PLASTIQUE PLAT REVÊTU À PROPENSION RÉDUITE À LA PROLIFÉRATION D'ALGUES, SON PROCÉDÉ DE FABRICATION EN LIGNE ET SON UTILISATION

(30) Priorität: 05.10.2010 DE 102010041966; 19.03.2010 DE 102010003042
(43) Veröffentlichungstag der Anmeldung: 23.01.2013
(73) Patentinhaber: Evonik Röhm GmbH, 64293 Darmstadt (DE)
(72) Erfinder: HASSKERL, Thomas, 61476 Kronberg (DE); SCHARNKE, Wolfgang, 64347 Griesheim (DE); BERKENKOPF, Martin, 64673 Zwingenberg (DE); SCHMIDT, Jann, 64331 Weiterstadt (DE); LU, Xin, 63450 Hanau (DE); SCHNEIDER, Uwe, 68649 Groß-Rohrheim (DE)
(86) Internationale Anmeldenummer: PCT/EP2011/053060
(87) Internationale Veröffentlichungsnummer: WO 2011/113692

(56) Entgegenhaltungen:
- EP-A1- 0 923 988
- EP-A2- 0 149 182

## Beschreibung

Die Erfindung betrifft ein beschichtetes flächiges Kunststoffmaterial mit reduzierter Neigung zur Veralgung, ein Verfahren zu dessen in Linie Herstellung sowie die Verwendung des beschichteten flächigen Kunststoffmaterials. Insbesondere bezieht sich die Erfindung auf ein Kunststoffmaterial mit den Merkmalen des Oberbegriffs des Anspruchs 1.

Beschichtete flächige Kunststoffmaterialien umfassend als Grundkörper ein thermoplastisches Kunststoffsubstrat und auf dem Grundkörper eine Beschichtung aus einer ersten Haftvermittlerschicht sowie einer zweiten Wasser spreitenden Schicht sind beispielsweise aus der EP 0 149 182 A2 = Dokument 1 oder D1 bekannt. Die in der D1 beschriebenen beschichteten Kunststoffplatten sind Wasser spreitend. Hierunter wird die Eigenschaft verstanden, dass sich Wasser, welches auf ihre Oberfläche kommt, dort nicht zu voneinander getrennten Tropfen zusammenzieht, sondern dass sich die Tropfen ausbreiten und bei Berührung zu einer geschlossenen Schicht zusammenfließen. Diese beispielsweise unter dem Namen Plexiglas no drop® bekannten Materialien werden zunehmend als Verglasungsmaterialien für Gewächshäuser, Schwimmhallen und ähnliche Feuchträume eingesetzt. Aufgrund der in den bevorzugten Einsatzbereichen herrschenden relativ hohen Luftfeuchte beobachtet man allerdings ein vergleichsweise schnelles Unansehnlich werden der Oberflächen. Dies kann unter anderem auf eine rasch einsetzende Algenbildung zurückgeführt werden, welcher häufig ein Primärbefall mit Bakterien vorhergeht. Hat die unerwünschte Algenbildung erst einmal eingesetzt, so ist sie nur schwer zu stoppen. Daher wäre es wünschenswert, Wasser spreitende Platten zur Verfügung zu stellen, die eine reduzierte Neigung zur Algenbildung aufweisen.

Es hat sich in der Praxis gezeigt, dass eine einmal eingetretene Algenbildung auf befallenen Oberflächen nur mehr sehr schwer zurückgedrängt werden kann. Vielmehr ist es zweckmäßiger, den anfänglich vorhandenen Bakterienrasen, welcher den Algen quasi als Nahrung dient, zu bekämpfen. Es sind nun bereits photokatalytisch wirksame Beschichtungen für Kunststoffmaterialien bekannt geworden, denen eine selbstreinigende und/oder antimikrobielle bzw. bewuchshemmende (algizide, fungizide) Wirkung zugesprochen werden kann.

So wird im Dokument D2 = JP2009-119462 A, welches in Form einer vom JPO und von INPIT erhältlichen Maschinenübersetzung ins Englische zur Verfügung steht, ein photokatalytisch beschichteter Grundkörper beschrieben, bei dem unter anderem das Wachstum von Pilzen oder Algen zurückgedrängt wird, während zugleich eine Erosion des Grundkörpers vermieden werden soll. Zu diesem Zweck weist eine photokatalytisch wirksame Schicht 1 bis 20 Gewichtsteile Titandioxidpartikel und 1 bis 70 Gewichtsteile anorganische Oxidpartikel, beispielsweise Silica (SiO2), auf. Daneben weist die photokatalytische Schicht der D2 einen Gehalt an Silber oder Kupfer auf, welcher in Silberoxid und Kupferoxid umgewandelt wird. Im Hinblick auf die Titandioxidpartikel werden solche eingesetzt, die über eine Partikelgröße im Bereich von 10 bis 60 nm verfügen, und weiterhin wird die Anatas-Modifikation des Titandioxids bevorzugt. Obwohl derlei photokatalytisch wirksame Schichten über eine hohe mikrobizide Wirksamkeit verfügen hat sich deren vergleichsweise hohe Aggressivität auch gegen organische Kunststoffmaterialien als relativ nachteilig herausgestellt. Mit anderen Worten die Aufbringung einer photokatalytisch wirksamen Schicht gemäß D2 auf einen gemäß D1 beschichteten Grundkörper führt zwar nicht zuletzt aufgrund der Gehalte an Silber oder Kupfer zu einer Bekämpfung des anfänglichen Bakterienrasens und folglich zur Eindämmung des Algenwachstums aber es besteht die Gefahr, dass die photokatalytisch wirksame Schicht die darunter liegenden Schichten bis hin zum Basiskunststoff angreift und so durch Abbau schädigt. Darüber hinaus ist der Zusatz an Silber oder Kupfer aufwändig und verteuert die Platte erheblich. Es wäre daher wünschenswert, eine katalytisch wirksame Schicht zu haben, welche ohne aufwändige Zusätze an Silber oder Kupfer auskommt und dennoch den anfänglichen Bakterienrasen so kontrollieren kann, dass die Neigung zur Algenbildung in Feuchträumen reduziert ist oder eine Veralgung vollständig vermieden werden kann. Zudem sind Silber und Kupfer Biozidprodukte im Sinne der Biozidrichtlinie der EU. Vor dem Hintergrund der Nachhaltigkeit ist es jedoch zweckmäßig keine unnötigen Giftstoffe in die Umwelt einzutragen und die bewuchshemmende Wirkung einer Beschichtung mit physikalischen dauerhaft wirkenden Methoden zu erreichen anstatt keimtötende organische oder anorganische Biozidprodukte auszutragen. Es ist daher auch ein Ziel der vorliegenden Erfindung auf Stoffe, die unter die Biozidrichtlinie der EU fallen, vollständig zu verzichten und dennoch eine für die Praxis ausreichende bewuchshemmende Wirkung zu entfalten.

Aus der D3 = WO2003102056 A1 sind ebenfalls photokatalytische Beschichtungen bekannt geworden. Die Beschichtungen gemäß der D3 umfassen zwei essentielle Schichten. Die erste Schicht besteht aus einem Siloxanlack, welcher gegebenenfalls Kieselsolpartikel enthält. Die zweite äußere Schicht, welche die eigentlich photokatalytisch wirksame Schicht ist, umfasst essentiell photokatalytisch aktive Titandioxidpartikel. Gemäß der D3 entspricht der Beschichtungsstoff zur Herstellung der zweiten Schicht im Wesentlichen dem Siloxanlack der ersten Schicht, mit dem Unterschied, dass photokatalytisch wirksame Titandioxidpartikel eingebracht werden müssen.

Im Bezug auf die Titandioxidpartikel offenbart die D3 solche von Showa Denko oder Toto, beispielsweise NTB 30A, als bevorzugt. Die Größe der gemäß D3 eingesetzten Titandioxidpartikel soll sich im Bereich von 1 bis 300 nm bewegen, der Anteil der Titandioxidpartikel in der äußeren Schicht liegt anspruchsgemäß zweckmäßig im Bereich von 0,01 bis 90 Gew.-%. Gemäß Beispiel 1 der D3 wird eine Mischung aus TiO₂ und SiO₂ Partikeln (3:1) in Form einer kolloidalen Lösung durch Fluten als selbstreinigende Lackschicht aufgetragen. Als Siloxanlack der äußeren Schicht wird im Beispiel 1 der D3 z.B. NTB 30B der Firma Showa Denko eingesetzt. Hierbei handelt es sich um ein Produkt aus einer Silan-Hydrolyse. Obwohl Lackverlauf und Härtung mit gut bewertet werden, fällt auf, dass zur vollständigen Aushärtung des Siloxanlacks und zur Erlangung einer hinreichenden mechanischen Festigkeit der Schicht ca. drei Stunden Trocknungszeit bei etwa 80 °C nötig sind. Diese lange Härtungszeit ist jedoch für eine in Linie Beschichtung ("in line coating") von flächigen Kunststoffsubstraten wie Platten prohibitiv. Neben diesem energie- und zeitintensivem Härtungsprozess ist außerdem ein Aktivierungsprozess zum Anätzen des Siloxanlacks notwendig, was ebenfalls nicht oder nur schwierig in einem in Linie Verfahren möglich ist. Es wäre mithin wünschenswert eine schnell trocknende Beschichtung zu haben, deren Härtungszeit im Bereich von Sekunden oder wenigen Minuten liegt und nicht Stunden benötigt. Außerdem sollte die Haftung zwischen der photokatalytisch wirksamen Schicht und der sich darunter befindenden Schicht ausreichend groß sein, um einen zusätzlichen Aktivierungsschritt beispielsweise durch Ätzen zu vermeiden. Eine simple Übertragung und Anwendung der aus der D3 bekannten zweischichtigen Beschichtung auf die beschichtete Platte der D1 führt daher nicht zum gewünschten Erfolg.

D4 = EP 0 923 988 A1 lehrt eine Photokatalysator-tragende Struktur, aufweisend:
eine Photokatalysator-Schicht,
eine Adhäsionsschicht und
ein Substrat,
dadurch gekennzeichnet, dass die Adhäsionsschicht zwischen der Photokatalysator-Schicht und dem Substrat vorgesehen und aus einem mit Silizium modifizierten Harz hergestellt ist, das 2 bis 60 % Massenanteil Silizium, 5 bis 40 % Massenanteil eines kolloidale Kieselsäure enthaltenden Harzes, oder 3 bis 60 % Massenanteil eines Polysiloxan enthaltenden Harzes enthält, wobei das Polysiloxan ein Polykondensationsprodukt einer mittels Formel (1) wiedergegebenen Verbindung darstellt:

   SiC1n₁(OH)n₂R¹n₃(OR²)n₄ (1),
(in der R¹ eine 1 = 8 Kohlenstoffatome aufweisende Alkylgruppe ist und wahlweise mit einer Arninogruppe, einer Carboxylgruppe oder einem Chloratom substituiert ist R² eine 1 - 8 Kohlenstoffatome aufweisende Alkylgruppe oder eine 1 - 8 Kohlenstoffatome aufweisende Alkoxy-substituierte Alkylgruppe ist,
n₁ eine Ganzzahl von 0 bis 2 ist,
n₂ und n₃ jeweils unabhängig eine Ganzzahl von 0 bis 3 sind,
n₄ eine Ganzzahl von 2 bis 4 ist, und
n1 + n2 + n3 + n4 4 gilt); und
wobei die Photokatalysator-Schicht aus einem Photokatalysatorpartikel-Komplex hergestellt ist, der 25 bis 95 % Massenanteil von entweder einem Metalloxid-Gel oder einem Metallhydroxid-Gel enthält und 5 bis 78 % Massenanteil eines Photokatalysators, wobei das Metalloxid-Gel bzw. das Metallhydroxid-Gel mindestens ein aus der Gruppe von Silizium, Aluminium, Titan, Zirkonium, Magnesium, Niobium, Tantal, Wolfram und Zinn ausgewähltes Metall aufweist, und wobei der Photokatalysator in der Form eines Pulvers, eines Sols oder einer Lösung vorliegt.

In Anbetracht des eingangs erwähnten und diskutierten Standes der Technik lag der Erfindung somit die Aufgabe zugrunde, ein flächiges Kunststoffmaterial zu schaffen, welches über Wasser spreitende Eigenschaft verfügt, bevorzugt über die aus dem Dokument 1 bekannte, und zugleich eine verminderte Neigung zur Bildung von Algen besitzt.

Dabei soll die Beschichtung eine gute Wirksamkeit aufweisen, d.h. sowohl die Wasser spreitende Eigenschaft als auch die Bewuchs hemmende Eigenschaft sollen in Kombination in hoher Qualität bestehen. Dabei soll die Beschichtung langlebig und stabil sein. Weiters soll die Beschichtung permanent hydrophil sein und zwar ohne, dass es hierzu eines Aktivierungsschrittes, wie zum Beispiel des Bestrahlens mit UV-Licht in feuchter Umgebung wie bei üblichen Titandioxidbeschichtungen, bedarf. Übliche Titandioxidbeschichtungen verlieren ihre Hydrophilie bei Trockenheit und Dunkelheit und werden erst durch Einfluss von Feuchtigkeit und in Gegenwart von Licht mit einem ausreichenden UV-Anteil wieder hydrophil.

Weiterhin soll die Beschichtung über eine hinreichende Scheuerbeständigkeit sowie eine gute Kaschierfähigkeit verfügen.

Noch weiterhin soll die Beschichtung eine hinreichende Witterungsbeständigkeit aufweisen.

Schließlich soll die Beschichtung "Substrat schonend" sein, was impliziert, dass die Beschichtung zwar einerseits die Algenbildung wirksam reduzieren soll aber andererseits nicht so aggressiv sein soll, dass das organische Material wie zum Beispiel das Kunststoffsubstrat auf welches sie aufgebracht ist, geschädigt wird. Bislang war insbesondere bei wirksamen Beschichtungen zu beobachten, dass nach kurzen Expositionszeiten bereits eine merkliche Substratschädigung auftrat. Solche Beschichtungen finden daher nur auf anorganischen Substraten Einsatz oder es werden aufwändige Zwischenschichten zum Schutz des Substrats erforderlich.

Die Bewuchs hemmend wirksame und Wasser spreitende Beschichtung soll in einem in Linie Verfahren applizierbar sein. Insbesondere soll eine kostengünstige, das heißt apparativ einfache und schnelle, transparente in Linie Beschichtung von flächigem Kunststoffmaterial innerhalb einer Extrusionsanlage zur Herstellung des Kunststoffmaterials durch Extrusion direkt im Anschluss an die Extrusion auf die noch extrusionswarmen Kunststoffmaterialien ermöglicht werden.

Zu diesem Zweck soll die Beschichtung nach der Applikation schnell und vollständig aushärtbar sein und zwar bei moderaten Härtungs- und Trocknungstemperaturen von weniger als 100 °C.

Außerdem soll die Beschichtung selbst ebenso wie das Verfahren zum Beschichten möglichst nachhaltig sein, was bedeutet, dass auf den Gebrauch von unter die Biozidrichtlinien der EU fallenden Stoffe, wie etwa Kupfer oder Silber, verzichtet werden soll ebenso wie das Beschichtungsverfahren möglichst einfach unter weitgehendem Verzicht auf umweltschädliche Stoffe wie etwa Lösungsmittel durchführbar sein soll.

Gelöst werden diese sowie weitere nicht explizit genannte jedoch aus der einleitenden Diskussion des Standes der Technik wie selbstverständlich ableitbare Aufgaben durch ein beschichtetes flächiges Kunststoffmaterial mit allen Merkmalen des Anspruchs 1. Im Hinblick auf das Verfahren sowie die Verwendung werden die der Erfindung zugrunde liegenden Aufgaben gelöst durch den Gegenstand des unabhängigen Anspruchs der jeweils entsprechenden Kategorie. Vorteilhafte Ausführungsformen und Abwandlungen der Erfindung werden in den jeweils abhängigen Ansprüchen unter Schutz gestellt.

Mittels eines beschichteten flächigen Kunststoffmaterials mit reduzierter Neigung zur Veralgung umfassend
a) als Grundkörper ein thermoplastisches Kunststoffsubstrat; und
b) auf dem Grundkörper eine photokatalytisch wirksame Beschichtung umfassend
   - eine Wasser spreitende Schicht, bei der es sich
      entweder um eine Sol-Haftvermittlerschicht Schicht b1+2) mit einer Schichtdicke von 1 µm bis 50 µm, umfassend einen Haftvermittler und ein Kolloidsol,
      oder um eine Kolloidsolschicht b2) mit einer Schichtdicke von 0,05 µm bis 2 µm, welche auf einer auf dem Substrat a) aufgebrachten Haftvermittlerschicht b1) angeordnet ist,
         handelt, wobei die wasserspreitende Schicht b2) zu mehr als 90 Gew.-% aus Siliziumdioxid und/oder einem Metalloxid besteht, und
   - eine auf der Wasser spreitenden Schicht b1+2) oder b2) angeordnete photokatalytisch wirksame Schicht b3),
      die durch Aufbringen und Trocknen einer Mischung erhältlich ist aufweisend bezogen auf den Feststoffanteil der Mischung in Gewichtsprozent
      b31) 2 bis 15 % Titandioxid und
      b32) 85 bis 98 % Siliziumdioxid und/oder eines nicht wasserlöslichen Metalloxids oder eines anionisch modifizierten Siliziumdioxids oder Metalloxids;
      wobei das Titandioxid partikelförmig ist mit einer mittleren Partikelgröße der Primärpartikel von kleiner als 10 nm und bevorzugt einem Anteil der Rutil-Modifikation von maximal 50 Gew. %;
gelingt es auf eine für den Fachmann nicht ohne Weiteres absehbare Weise, ein beschichtetes flächiges Kunststoffmaterial bereitzustellen, bei welchem die permanente Wasserspreitung mit der photokatalytischen Wirksamkeit kombiniert ist, ohne dass die thermoplastischen Kunststoffsubstrate geschädigt werden. Das erfindungsgemäß beschichtete, flächige Kunststoffsubstrat wird in einem wenig aufwändigen, kostengünstigen und schnellen in Linie Verfahren hergestellt und überzeugt bei seiner Verwendung durch Stabilität des Substrats und Wirksamkeit der Beschichtung gegen anfängliche Algenbesiedlung.

Zudem werden mit der Erfindung eine ganze Reihe weiterer Vorteile erzielt. Hierzu gehören unter anderem:
- Die erfindungsgemäße, mindestens drei Lagen oder Schichten umfassende, Beschichtung ist photokatalytisch wirksam gegen einen Bakterienrasen, welcher Voraussetzung für einen Algenbewuchs ist, und verhindert oder vermindert somit das anfängliche Algenwachstum.
- Trotz einer hinreichenden photokatalytischen Effektivität zur Verringerung oder Unterdrückung des anfänglichen Algenwachstums wird das Substrat in Form eines thermoplastisch verarbeitbaren Kunststoffs, nicht geschädigt.
- Die photokatalytisch wirksame Schicht wird aus einem rein wässrigen System appliziert und ist daher umweltschonend.
- Die photokatalytische Schicht enthält keine biozid wirksamen Bestandteile, die unter die Biozidrichtlinie der EU fallen, wie z.B. Silber, Kupfer oder organische Biozide, die sich verbrauchen und mit der Zeit in die Umgebung ausgetragen werden. Sie entfaltet ihre Wirkung nachhaltig insbesondere ohne Freisetzung von Bioziden in die Umwelt.
- Aufgrund der Lösemittelfreiheit des zu applizierenden Systems als auch der Abwesenheit organischer Bindemittel ist die photokatalytisch wirksame Beschichtung besonders langzeitstabil.
- Die Beschichtung weist nur eine sehr geringe Dicke auf, zweckmäßig sind alle drei Schichten zusammen nicht dicker als etwa 2 µm, was in einem schonenden Umgang mit den natürlichen Ressourcen mündet und zu einer daraus resultierenden vergleichsweise niedrigen Umweltbelastung führt.
- Bei der photokatalytisch wirksamen Schicht handelt es sich um eine transparente und klare Beschichtung, die sowohl im trocknen als auch im nassen Zustand klar und transparent bleibt.
- Obwohl die in der photokatalytisch wirksamen Schicht enthaltenen Titandioxidpartikel mit relativ kleinem mittleren Partikeldurchmesser im Bereich von kleiner als 10 nm per se zum "Kreiden" neigen, worunter die Tendenz verstanden wird, als Partikel eine zu geringe Haftung zur umgebenden Matrix aufzuweisen und sich somit beim Reiben oder Scheuern der Oberfläche bzw. durch natürliche Erosion aufgrund von Umwelteinflüssen wie UV-Licht, Regen und Wind aus der Umgebung herauszulösen, wird bei der Erfindung durch die besondere Wahl der Mengenverhältnisse zwischen Titandioxidpartikeln und Siliziumdioxidpartikeln eine kreidungsfreie und dauerhafte Beschichtung geschaffen, welche mechanisch stabil ist und aus der sich die Titandioxidpartikel unter üblichen Bedingungen nicht herauslösen.
- Die photokatalytische Schicht verfügt über eine vergleichsweise hohe mechanische Festigkeit obwohl die Kieselsol-Matrix der photokatalytischen Schicht porös ist, wodurch sie eine relativ große aktive Oberfläche hat, verglichen mit einer glatten Schicht.
- Die Beschichtung ist ohne besondere Konditionierung aktiv und permanent hydrophil, d.h. der Randwinkel eines auf die Schicht aufgebrachten Wassertropfens ist immer, auch nach Dunkelphasen oder Trockenheit kleiner als 15°, vorzugsweise kleiner als 7°.
- Jede der einzelnen Schichten, also sowohl die Haftvermittlerschicht als auch die Wasser spreitende Schicht als auch die photokatalytisch wirksame Schicht verfügen vorzugsweise über eine hohe Transparenz.
- Damit verfügt auch die Beschichtung insgesamt vorzugsweise über eine sehr hohe Transparenz, so dass ein damit ausgerüstetes transparentes Kunststoffsubstrat besonders zweckmäßig als Verglasungsmaterial verwendet werden kann.
- Die Erfindung bietet insbesondere die Vereinigung, d.h. Kombination von Eigenschaften, die bislang so nicht bekannt war. Insbesondere besteht die Erfindung in der Kombination einer kostengünstigen, transparenten in Linie Beschichtung mit geringem Haze in einer Extrusionsanlage mit guter Wirksamkeit, Langlebigkeit, permanenter Hydrophilie ohne Aktivierung, kurzen Härtungs- und Trocknungszeiten von wenigen Minuten, moderaten Härtungs- und Trocknungstemperaturen von deutlich kleiner als 100 °C, Scheuerbeständigkeit, Kaschierfähigkeit, Witterungsbeständigkeit, reduzierter Algenbildung und Substratschonung vor photokatalytischem Angriff.

Gegenstand der Erfindung sind beschichtete flächige Kunststoffmaterialien, die als Grundkörper ein thermoplastisches Kunststoffsubstrat aufweisen. Für die Zwecke der vorliegenden Erfindung geeignete thermoplastische Kunststoffsubstrate sind an sich bekannt. Der Begriff "thermoplastisch" bezieht sich in diesem Zusammenhang auf Kunststoffe, welche sich in einem gewissen Temperaturbereich reversibel verformen lassen. Das bedeutet, dass die Verformung beliebig of wiederholt werden kann, solange nicht durch Überhitzung die thermische Zersetzung des Kunststoffs eintritt. Derartige Substrate umfassen im Rahmen der Erfindung insbesondere Polycarbonate, Polystyrole, Polyester, beispielsweise Polyethylenterephthalat (PET) und Polybutylenterephthalat (PBT), cycloolefinische Polymere und Copolymere (so genannte COCs) und/oder Poly(meth)acrylate.

Hierbei umfasst die Schreibweise "Poly(meth)acrylate" ebenso wie in der gesamten Offenbarung Polymethacrylate und Polyacrylate.

Von den genannten thermoplastisch verarbeitbaren Kunststoffmaterialien sind Polycarbonate, cycloolefinische Polymere und Copolymere sowie Poly(meth)acrylate bevorzugt. Ganz besonders bevorzugt sind Polymethacrylate, beispielsweise Polymethylmethacrylat (PMMA).

Die für die Erfindung in Frage kommenden Kunststoffsubstrate können beispielsweise aus Formmassen der zuvor genannten Polymere hergestellt werden. Hierbei werden im Allgemeinen thermoplastische Formgebungsverfahren eingesetzt, wie Extrusion oder Spritzguss, besonders bevorzugt Extrusion. Das Gewichtsmittel des Molekulargewichts Mw der erfindungsgemäß als Formmasse zur Herstellung der Kunststoffsubstrate zu verwendenden Homo- und/oder Copolymere kann über einen weiten Bereich variieren, wobei das Molekulargewicht üblicherweise auf den Verwendungszweck und die Verarbeitungsweise der Formmasse abgestimmt wird. Im Allgemeinen liegt es aber im Bereich zwischen 20.000 und 1.000.000 g/mol, vorzugsweise 50.000 bis 500.000 g/mol und besonders bevorzugt 80.000 bis 300.000 g/mol, ohne dass hierdurch eine Einschränkung erfolgen soll.

Des Weiteren können die Kunststoffsubstrate durch Gießverfahren, beispielsweise nach dem bekannten Kammerverfahren, erzeugt werden. Hierbei werden beispielsweise geeignete (Meth)acrylmonomere und/oder Präpolymerisate in eine Form gegeben und polymerisiert. Derartige (Meth)acrylmischungen weisen im Allgemeinen die erwähnten (Meth)acrylate, insbesondere Methylmethacrylat auf. Des Weiteren können die (Meth)acrylmischungen die zuvor dargelegten Copolymere sowie, insbesondere zur Einstellung der Viskosität, Polymere, insbesondere Poly(meth)acrylate, enthalten.

Von den durch Spritzguss, Extrusion oder Gießverfahren (Kammerverfahren, Rosteroverfahren) erhältlichen thermoplastischen Kunststoffsubstraten sind für die Erfindung solche von besonderem Interesse, die nach Extrusionsverfahren erhältlich sind. Dies hängt mit dem Ziel zusammen ein in Linie Verfahren bereitzustellen, was mittels kontinuierlicher Extrusionsverfahren vorteilhafter zu verwirklichen ist als mit diskontinuierlichen Gießverfahren.

Darüber hinaus können die zur Herstellungen der Kunststoffsubstrate zu verwendenden Formmassen sowie die Acrylharze übliche Zusatzstoffe aller Art enthalten. Hierzu gehören unter anderem Antistatika, Antioxidantien, Entformungsmittel, Flammschutzmittel, Schmiermittel, Farbstoffe, Fließverbesserungsmittel, Füllstoffe, Lichtstabilisatoren und organische Phosphorverbindungen, wie Phosphite, Phosphorinane, Phospholane oder Phosphonate, Pigmente, Verwitterungsschutzmittel und Weichmacher. Die Menge an Zusatzstoffen ist jedoch auf den Verwendungszweck abzustimmen.

Besonders bevorzugte Formmassen, die Poly(meth)acrylate umfassen, sind unter dem Handelsnamen PLEXIGLAS® von der Firma Evonik Röhm GmbH kommerziell erhältlich. Bevorzugte Formmassen, die cycloolefinische Polymere umfassen, können unter dem Handelsnamen Topas® von Ticona und Zeonex® von Nippon Zeon bezogen werden. Polycarbonat-Formmassen sind beispielsweise unter dem Handelsnamen Makrolon® von Bayer Material Science oder Lexan® von Sabic erhältlich.

Besonders bevorzugt umfasst das Kunststoffsubstrat mindestens 80 Gew.-%, insbesondere mindestens 90 Gew.-%, bezogen auf das Gesamtgewicht des Substrats, Poly(meth)acrylate, Polycarbonate und/oder cycloolefinische Polymere. Besonders bevorzugt bestehen die Kunststoffsubstrate aus Polymethylmethacrylat, wobei das Polymethylmethacrylat (PMMA) übliche Additive enthalten kann.

Die äußere Form oder Gestalt der Kunststoffmaterialien, die gemäß der Erfindung beschichtet werden, kann sehr unterschiedlich sein. Es wird nur vorausgesetzt, dass es sich um ein Material handelt, bei dessen Anwendung die Ansammlung von getrennten Wassertropfen an ihrer Oberfläche unerwünscht, die Bildung einer zusammenhängenden Wasserschicht erwünscht und die Unterdrückung des anfänglichen Algenwachstums ebenso erwünscht ist. Dies gilt in ganz besonders exzellenter Weise für Verglasungs- und Abdeckungsmaterial für feuchte Räume, wie etwa Gewächshäuser, Bäder, Saunen oder Verglasungsmaterialien für Gebäude in tropischen Breiten mit überwiegend hoher Luftfeuchte.

Bevorzugte Materialien sind flächenförmige Werkstoffe, wie Folien und Tafeln oder Platten. Zu den Folien zählen Flächengebilde unter 1 mm Dicke bis zu etwa 0,01 mm und vorzugsweise 0,05 bis 0,5 mm Dicke. Zu den Tafeln oder Platten zählen steife Flächengebilde ab 1 mm Dicke bis zu etwa 50 mm und vorzugsweise 2 bis 20 mm, besonders bevorzugt 2 bis 10 mm Dicke. Besonders bevorzugt sind einstückig extrudierte Hohlkammerplatten, Stegdoppelplatten oder auch so genannte Fachwerkplatten, die in der Regel eine Gesamtdicke zwischen 5 und 50 mm haben. Ihre Außenwände haben meistens eine Dicke von 1/20 bis 1/8 der Gesamtdicke und sind durch senkrecht oder schräg dazu verlaufende Stege einstückig miteinander verbunden.

Die Oberflächen des zu beschichtenden Kunststoffmaterials sind in der Regel eben und glatt und meistens mehr oder weniger glänzend. Das Kunststoffmaterial kann durchsichtig, durchscheinend oder lichtdurchlässig sein; vorzugsweise ist es klar und farblos oder weiß durchscheinend.

Die Erfindung eignet sich besonders gut für alle Kunststoffe deren Oberflächen von sich aus wasserabstoßend sind. Das sind vor allem Kunststoffe, die selbst keine oder vernachlässigbar wenige polare Gruppen in ihrer Struktur enthalten. Dazu zählen z.B. Polyethylen, Polypropylen, Polystyrol und dessen schlagzäh modifizierte Abkömmlinge, Polyvinylchlorid und Polyester. Sie werden als wasserabstoßend bezeichnet, wenn der Randwinkel eines darauf liegenden Wassertropfens mehr als 70° beträgt. Bevorzugte Kunststoffe sind hierbei wiederum Poly(meth)acrylate (Acrylglas) und Polycarbonate, insbesondere des Bisphenols-A; diese Werkstoffe werden als steife Kunststoffverglasungsmaterialien für Gewächshäuser und Schwimmhallen eingesetzt, und zwar vorzugsweise in Form von extrudierten Hohlkammerplatten.

Das als Grundkörper fungierende thermoplastische Kunststoffsubstrat a) weist eine photokatalytisch wirksame Beschichtung b) auf. Die Beschichtung b) als Ganzes verbindet die Wasserspreitung mit einer sekundären Wirkung gegen Mikroorganismen resultierend aus der Photokatalyse.

Die Beschichtung b) wiederum weist erfindungsgemäß mindestens eine Wasser spreitende Schicht b1+2) oder b2) und eine darauf angeordnete photokatalytisch wirkende Schicht b3) auf.

In einer ersten bevorzugten Ausführungsform weist die Beschichtung b) drei verschiedene Schichten oder Lagen auf, die in der Reihenfolge b1), b2) und b3) übereinander und zeitlich nacheinander auf zumindest einen Teil der Oberfläche des Substrats a) appliziert werden.

In zweiten bevorzugten Ausführungsform weist die Beschichtung b) zwei verschiedene Schichten oder Lagen auf, die in der Reihenfolge b1+2) und b3) übereinander und zeitlich nacheinander auf zumindest einen Teil der Oberfläche des Substrats a) appliziert werden.

In der ersten bevorzugten Ausführungsform ist als erste Schicht oder Lage auf dem Substrat a) eine Haftvermittlerschicht b1) angeordnet. Diese Haftung vermittelnde Schicht b1) befindet sich demzufolge zwischen der Wasser spreitenden Schicht b2) und der wasserabstoßenden Kunststoffoberfläche des Substrats a). Wenn der Grundkörper nur teilweise mit einer Wasser spreitenden und photokatalytischen Beschichtung versehen ist, genügt es, wenn auch die Haftung vermittelnde Schicht nur auf den entsprechenden Teilbereichen aufgebracht wird.

Die wesentliche Eigenschaft der Haftung vermittelnden Schicht liegt darin, dass sie eine größere Haftfestigkeit sowohl zu der Kunststoffoberfläche als auch zu der Wasser spreitenden Schicht besitzt als die letztere zu der Kunststoffoberfläche. Während es zahlreiche organische Polymerstoffe gibt, die an einer wasserabstoßenden Kunststoffoberfläche gut haften, bedarf es zu einer ausreichenden Haftung an der Wasser spreitenden Schicht bestimmter Eigenschaften. Sie beruhen auf den polaren Gruppen in der Haftung vermittelnden Schicht in Verbindung mit ihrer Unlöslichkeit und Unquellbarkeit in Wasser. Die polaren Gruppen müssen nicht notwendigerweise chemisch an den Hauptbestandteil der Haftung vermittelnden Schicht gebunden sein, obwohl dies bevorzugt ist; vielmehr genügt es, wenn sie chemisch an einen Nebenbestandteil gebunden sind. Es wird angenommen, dass die Haftung durch eine Wechselwirkung zwischen den Sauerstoffatomen oder Hydroxylgruppen der Oxide und den polaren Gruppen zustande kommt. Da Wassermoleküle ebenfalls zu einer starken Wechselwirkung mit den Oxidsauerstoffatomen fähig sind und die polaren Gruppen verdrängen können, soll das Polymermaterial der Haftung vermittelnden Schicht möglichst wenig Wasser aufnehmen. Darüber hinaus würde die Haftfestigkeit auch durch morphologische Veränderungen infolge häufiger Quellung und Entquellung beeinträchtigt. Daraus erklärt sich die Bedeutung einer geringeren Quellbarkeit in Verbindung mit einer begrenzten Polarität, obwohl die Erfindung damit nicht auf eine bestimmte Theorie festgelegt werden soll.

Das organische Material der Haftung vermittelnden Schicht besteht aus wenigstens einem makromolekularen Stoff mit einem gewichtsmittleren Molekulargewicht Mw von größer als 1.000, vorzugsweise über 10.000. Es kann sich um ein rein organisches Material mit einem durchgehenden Kohlenstoffgerüst bzw. einem von Sauerstoff- oder Stickstoffatomen unterbrochenen Kohlenstoffgerüst oder ein gemischt organischanorganisches Material handeln, dessen durchgehendes Grundgerüst ganz oder teilweise aus Heteroatomen, wie Sauerstoff und Silizium, besteht.

Als polare Gruppen sind besonders Hydroxyl-, Carboxyl-, Sulfonyl-, Carbonsäureamid, Nitril- und Silanol-Gruppen zu nennen. Sie sind vorzugsweise Bestandteil einer makromolekularen Verbindung, die gleichzeitig unpolare Gruppen enthält, wie Alkyl-, Alkylen-, Aryl- oder Arylengruppen. Das Verhältnis von polaren zu unpolaren Gruppen ist zweckmäßig so zu wählen, dass Haftung sowohl zu der wasserabstoßenden - also unpolaren - Kunststoffoberfläche als auch zu der Wasser spreitenden, also hydrophilen Schicht erreicht wird Die Polarität soll dabei nicht so groß sein, dass das Material der Haftung vermittelnden Schicht selbst wasserlöslich oder in Wasser quellbar wäre. Die Quellung bei Sättigung mit Wasser bei 20° liegt nicht über 10 Vol-% und vorzugsweise nicht über 2 Vol.-%. Die Polarität soll jedoch auch nicht so niedrig sein, dass das Material in völlig unpolaren Lösungsmitteln, wie Benzin, löslich wäre. Die meisten geeigneten Materialien sind in begrenzt polaren organischen Lösungsmitteln löslich, wie Chlorkohlenwasserstoffen, Estern, Ketonen, Alkoholen oder Ethern oder deren Gemischen mit Aromaten.

Das Material der haftvermittelnden Schicht ist in der Regel nicht selbst Wasser spreitend. Wassertropfen auf seiner Oberfläche bilden meistens Randwinkel von über 20°, insbesondere 20° bis 70°.

Die erforderliche Ausgewogenheit der Affinitäten zu den beiden angrenzenden Schichten wird im Allgemeinen erreicht, wenn das Material der Haftung vermittelnden Schicht 0,4 bis 700 Milliäquivalent polare Gruppen je 100 g des Polymermaterials enthält.

Weiterhin ist es von Vorteil, wenn das Polymermaterial dreidimensional vernetzt ist, jedoch darf eine solche Vernetzung für den Fall, dass die haftvermittelnde Schicht aus einer Lösung des Polymermaterials erzeugt wird, erst nach Bildung der Schicht herbeigeführt werden. Die Vernetzung kann gegebenenfalls die Quellfähigkeit verringern. Sie soll jedoch auch nicht so stark sein, dass das Polymermaterial vollständig hart und spröde ist. Günstig ist eine gewisse elastische Dehnbarkeit des - gegebenenfalls vernetzten - Polymermaterials.

Eine geeignete Klasse von Polymermaterialien besteht aus Polymerisaten bzw. Mischpolymerisaten von Vinylmonomeren. Wenigstens ein Teil der Vinylmonomereinheiten weist zweckmäßig eine polare Gruppe der genannten Art auf. Sie kann aus den zugrundeliegenden Monomeren stammen oder durch nachträgliche Umsetzung in das Polymere eingeführt worden sein. Ein Teil der Vinylmonomeren kann bevorzugt unpolare Gruppen enthalten, wie Alkyl-, Alkylen-, Aryl- oder Arylengruppen.

Die polaren Gruppen unterscheiden sich in ihrer polarisierenden Wirksamkeit. Diese nimmt in der Reihenfolge Nitril, Hydroxyl, prim. Carbonsäureamid, Carboxyl, Sulfonyl, Silanol zu. Je stärker die polarisierende Wirkung ist, umso geringer liegt der erforderliche Gehalt im Polymermaterial. Während von den schwach polaren Gruppen 4 bis 100 mÄquivalent polare Gruppen je 100 g Polymermaterial verwendet werden, genügen 0,4 bis 20 mÄquivalent /100g der stark polaren Gruppen. Wird der Gehalt an polaren Gruppen zu niedrig gewählt, so wird keine ausreichende Haftung der Wasser spreitenden Schicht erreicht. Ist dagegen der Gehalt an polaren Gruppen zu hoch, steigt die Wasserquellbarkeit zu stark an, was wiederum die Haftung vermindert.

Zu den Vinylmonomeren, die die genannten Gruppen tragen, gehören z.B. Acryl- und Methacrylnitril, Hydroxyalkylester ungesättigter polymerisierbarer Carbonsäuren, insbesondere solche mit 2 bis 6 C-Atomen im Hydroxyalkylrest, Glycidylacrylat und - methacrylat oder die durch Hydrolyse daraus entstehenden Dihydroxialkylester, die Amide der genannten Säuren, vor allem: Acrylamid und Methacrylamid, Acryl-, Methacryl-, Malein-, Fumar- oder Itaconsäure, ferner Vinylsulfonsäure, Styrolsulfonsäure, Acryl- und Methacrylamidoalkansulfonsäuren, Acryloxy- und Methacryloxy-alkan-sulfonsäuren, Acryloxy- und Methacryloxy-alkyl-trialkoxysilane bzw. deren Hydrolyseprodukte. Polare Gruppen, die nicht basisch und nicht salzartig sind, sind bevorzugt, insbesondere Hydroxyl-, Carboxyl-, Carbonamido- und Silanolgruppen.

Als Vinylmonomere mit unpolaren Gruppen sind die Alkylester von ungesättigten, polymerisierbaren Säuren, wie z. B. Acryl-, Methacryl-, Malein-, Fumar- oder Itakonsäure, zu nennen. Die Alkylreste enthalten im allgemeinen 1 bis 18 C-Atome, vorzugsweise 1 bis 8 C-Atome. Weiterhin gehören zu diesen Monomeren Styrol, Vinyltoluol, Vinylacetat, Vinylpropionat und andere Vinylester von Fettsäuren, Vinylchlorid, Vinylidenchlorid. Mischpolymerisate aus polaren und unpolaren Vinylmonomeren sind nach bekannten Verfahren der radikalischen Polymerisation herstellbar, z. B. durch Lösungs- oder Emulsionspolymerisation. Die entstehenden Lösungen oder Dispersionen können, gegebenenfalls nach Verdünnung, unmittelbar zur Herstellung der haftvermittelnden Schicht eingesetzt werden.

Andere Klassen von geeigneten Polymermaterialien für die haftvermittelnde Schicht sind durch polare Gruppen modifizierte Polyester, Polyäther, Polycarbonate, Polyurethane oder Epoxidharze. Die polaren Gruppen können Bestandteil der eingesetzten Ausgangsstoffe sein oder sie können nachträglich in das Polymermaterial eingeführt worden sein. Polymermaterialien mit Hydroxylgruppen können z. B. mit Silanen, die wenigstens zwei an Silicium gebundene Halogenatome , Alkoxygruppen oder Aryloxygruppen tragen, umgesetzt werden. Als Beispiele seien Tetrachlorsilan, Tetraäthoxysilan, Tetraphenoxysilan, Methyltrimethoxysilan oder Methyltrichlorsilan genannt. Durch Hydrolyse der so eingeführten Gruppen, gegebenenfalls erst nach Bildung der haftvermittelnden Schicht entstehen polare Silanol-Gruppen. Sie haben vor den anderen polaren Gruppen den Vorteil, dass sie eine sehr starke Bindung gegenüber Silizium- und Aluminiumoxyd ausüben, aber die Wasserquellbarkeit der haftvermittelnden Schicht kaum beeinflussen. Daher bilden Polymermaterialien mit Si-OH-Gruppen als haftvermittelnde Schicht eine bevorzugte Ausführungsform der Erfindung.

Die haftvermittelnde Wirkung kommt an den beiden Grenzflächen zu der wasserabstoßenden Kunststoffschicht einerseits und der Wasser spreitenden Schicht andererseits zustande. Dazu genügt schon eine Schicht von geringer Dicke. Die Schicht ist daher in der Regel nur 0,01 bis 20 µm und vorzugsweise 0,01 bis 2 µm dick. Geringere Dicken als 0,01 µm sind nur schwer ohne Fehlstellen zu erzeugen. Größere Dicken als 20 µm sind weniger wirtschaftlich, aber technisch voll wirksam. Unter Umweltgesichtspunkten sind Schichten mit möglichst geringer Dicke bevorzugt, beispielsweise im Bereich von 0,01 bis 1 µm. Noch zweckmäßiger sind Schichtdicken zwischen 0,02 und 0,9 µm für die Haftvermittlerschicht.

Eine besonders wirksame Haftvermittlerschicht lässt sich erfindungsgemäß durch den Einsatz eines lösemittelhaltigen Primers erzielen, wie z. B. eine 2,5 prozentige Lösung eines Mischpolymerisats aus 47 Gew.-% Butylmethacrylat, 47 Gew.-% Methylmethacrylat, 3 Gew.-% eines alkylierten N-Methylolmethacrylamids und 3 Gew.-% Hydroxyethylacrylat in einem Gemisch aus Isopropylalkohol und Toluol.

Weiterhin sind auch haftvermittelnde Schichten bevorzugt, welche durch Auftragen aus einer Lösung oder einer Polymerdispersion erhältlich sind, die ein Mischpolymerisat enthält aus etwa 47 Gew.-% Butylmethacrylat, 47 Gew.-% Methylmethacrylat, 3 Gew.-% Glycidylmethacrylat und etwa 3 Gew.-% Methacrylsäure.

Weiterhin sind auch haftvermittelnde Schichten bevorzugt, welche durch Auftragen aus einer Lösung und Hydrolyse erhältlich sind, wobei die Lösung ein Mischpolymerisat aus etwa 87 Gew.-% Methylmethacrylat und etwa 13 Gew.-% gamma-Methacryl-oxypropyltrimethoxisilan umfasst.

Noch mehr sind auch haftvermittelnde Schichten bevorzugt, welche durch Auftragen aus einer Lösung und Hydrolyse erhältlich sind, wobei die Lösung ein Mischpolymerisat aus etwa 85,6 Gew.-% Methylmethacrylat, etwa 12,4 Gew.-% gamma-Methacryl-oxypropyltrimethoxisilan und 2 Gew.-% N-Butoxymethylmethacrylamid enthält.

An die haftvermittelnde Schicht b1) schließt sich eine Wasser spreitende Schicht b2) an. Als Wasser spreitende Schichten werden im Rahmen der Erfindung mehr oder weniger hydratisierte und neutralisierte Formen von Oxiden, wie Siliciumdioxid und Aluminiumoxid, oder Oxidgemischen oder Mischoxiden, eingesetzt. Überraschend hat sich im Rahmen der Erfindung herausgestellt, dass im Gegensatz zum Stand der Technik, nach dem häufig die reinen Oxide, Oxidgemische oder Mischoxide in nicht (teil-)neutralisierter oder (teil-)hydratiserter Form eingesetzt werden, hydratiserte, teilhydratisierte, neutraliserte und teilneutralisierte Formen zu einer deutlich verbesserten Haftungsperformance führen. Reine Oxide hingegen, wobei rein auf die fehlende Neutralisiation und Hydratisierung zielt, gehen keine ausreichende Verbindung mit dem Primer und den anderen Partikeln ein. Im Ergebnis haftet eine solche Schicht nicht und lässt sich wie Staub abwischen. Von besonderem Interesse für die Erfindung sind auch beispielsweise Silicium-Alminium-Mischoxide mit einem Si/Al-Verhältnis von 1 : 1 bis 30 : 1. Sie sind teilweise mit Basen neutralisiert und enthalten dann Kationen, wie Alkali- oder Ammoniumionen. Die letzteren verflüchtigen sich leicht beim Trocknen.

Andere Metalloxide, die neben oder anstelle von Silicium- bzw. Aluminiumoxid in der Wasser spreitenden Schicht enthalten sein können, leiten sich z. B. von den Elementen Zink, Titan, Zirkon oder Chrom ab. Bevorzugt werden farblose Metalloxide. Voraussetzung ist stets, dass die Oxide in Wasser praktisch unlöslich sind. Die Löslichkeit der Oxide als solche oder ihrer hydratisierten Formen in Wasser von 20°C soll unter 200 ppm liegen.

Die Oxidschicht übt eine stark Wasser spreitende Wirkung aus. Sie ist sowohl auf die gute Wasserbenetzbarkeit der Oxide als auch auf die submikroskopische Rauhigkeit der Oxidschicht zurückzuführen.

Die Metalloxide können schon in kolloidaler Form aufgebracht werden, insbesondere in Wasser als suspendierendem Medium, jedoch sind auch Kolloide in polaren Flüssigkeiten, wie Dimethylformamid oder Isopropanol, oder in wässrigen Lösungsmitteln, wie Mischungen von Aceton, Methanol oder Äthanol mit Wasser verwendbar. Die Kolloidteilchen haben eine Größe unter 200 nm, vorzugsweise unter 120 nm, insbesondere 5 bis 100 nm. Sie enthalten in allen Fällen nicht die reinen Oxide, sondern wie bereits oben angesprochen mehr oder weniger hydratisierte und neutralisierte Formen.

Kolloidale Kieselsäure ist in verschiedenen verwendbaren Präparaten im Handel. Besonders geeignet sind anionische Typen, die zur Stabilisierung Kationen, z. B. Alkali- oder Ammoniumionen, enthalten.

Wesentlich für die Erfindung ist, dass die wasserspreitende Schicht b2) - abgesehen von einem eventuellen Tensidgehalt -überwiegend, d.h. zu mehr als 90 Gew.-%, vorzugsweise zu mehr als 97 Gew.-% aus Siliciumdioxid und/oder dem Metalloxid besteht. Vorzugsweise wird auf weitere Bestandteile; die nicht wasserlöslich sind, vollständig verzichtet. Auf jeden Fall muss eine Wasserspreitung bestehen, die einem Randwinkel eines Wassertropfens gleich oder unter 15°, vorzugsweise gleich oder unter 7°, entspricht.

Eine besonders zweckmäßige Ausführungsform der Erfindung kennzeichnet sich dadurch, dass die Wasser spreitende Schicht im Wesentlichen aus Siliziumdioxid besteht. Besonders zweckmäßig sind natriumhaltige Kieselsole wie angegeben mit einem Verhältnis der Molzahlen SiO2:NaOH von 100:2.

Die Wasser spreitende Schicht ist durch Auftragen und Trocknung eines Kolloidsols erhältlich. Zu besonders bevorzugten Kolloidsolen gehören Kieselsole. Diese enthalten im Unterschied zu Siloxanlacken oder Produkten, die aus einer Silan-Hydrolyse erhalten werden, keine oder nur sehr geringe organische Verunreinigungen oder Nebenprodukte, was sich insbesondere vorteilhaft auf die Härtungszeiten auswirkt.

Besonders zweckmäßig handelt es sich bei den Kieselsolen um monodisperse Siliziumdioxidpartikel. Solche monodispersen SiO₂-Partikel lassen sich beispielsweise durch Behandeln einer wässrigen Alkalisilicat-Lösung (Wasserglas) mit Ionenaustauschern und Stabilisierung durch wenig Alkali erhalten. Hierbei liegt das Molverhältnis von SiO₂ : NaOH zweckmäßig bei etwa 100 : 2.

Im Vergleich zu den Produkten aus einer Silan-Hydrolyse zeichnen sich die für die erfindungsgemäße Wasser spreitende Schicht bevorzugten Kieselsole beim Trocknen durch ein schnelles Aggregationsverhalten sowie eine schnelle Vernetzung aus.

Die monodispersen Siliziumdioxidpartikel selbst haben im Rahmen der Erfindung zweckmäßig eine bestimmte Größe. Der mittlere Teilchendurchmesser der Partikel liegt grundsätzlich im Bereich von 5 bis 80 nm. Bevorzugt ist ein mittlerer Teilchendurchmesser im Bereich von 7 bis 50 nm. Besonders bevorzugt weisen die Primärpartikel eine mittlere Teilchengröße im Bereich von 10 bis 30 nm auf. Liegt der mittlere Teilchendurchmesser unterhalb von 5 nm, so sind die Sole nur noch in niedrigen Konzentrationen handhabbar und haben eine geringe Lagerstabilität. Liegt der mittlere Teilchendurchmesser oberhalb von 80 nm, so kann man trübe Schichten erhalten und die Haftung auf dem Substrat vermindert sich.

In einer besonderen Ausführungsform der Erfindung können Mischungen monodisperser Kieselsole mit unterschiedlichen Teilchengrößen eingesetzt werden.

Wenn in diesem Zusammenhang von mittlerem Teilchendurchmesser gesprochen wird, so ist darunter die Größe zu verstehen, welche folgendermaßen ermittelt wird. Man ermittelt die spezifische Oberfläche und errechnet daraus die Teilchengröße mit der Annahme dass es sich um einheitliche kugelförmige Partikel handelt.

Die spezifische Oberfläche wird nach Trocknen der Kieselsole bis zur festen, amorphen Kieselsäure unter definierten Bedingungen nach der Stickstoffadsorptionsmethode als BET-Wert bestimmt (S. Brunauer, P.H. Emmet u. E. Teller: J. Amer, Chem. Soc. 60, 309-312 [1938]). Nach Eichung auf diese BET-Werte kann auch direkt aus wässriger Lösung mit Natronlauge titriert werden (G.W. Sears: Anal. Chem. 12, 1981-1983 [1956]).

Ein weiteres Merkmal der Wasser spreitenden Schicht ist ihre Dicke. Es wurde festgestellt, dass die Delaminationsneigung der Schicht mit der Dicke stark zunimmt. Da für die Wirksamkeit der Schicht nur ihre geschlossene Oberfläche aber nicht ihre Dicke von Bedeutung ist, ergibt die dünnstmögliche Schicht, die sich aus dem eingesetzten Kolloid herstellen lässt, bereits die bestmögliche Wirkung. Daher wird eine Schichtdicke von 0,05 bis 2 µm, insbesondere 0,05 bis kleiner oder gleich 1 µm, und besonders zweckmäßig 0,1 bis kleiner oder gleich 1 µm eingesetzt. Noch dünnere Schichten als 0,05 µm bieten unter Umständen keine ausreichende Schutzwirkung gegen den photokatalytischen Angriff der darauf folgenden photokatalytisch wirksamen Schicht. Dickere Schichten als 2 µm können dazu neigen, spröde zu werden, eine geringe Haftung aufzuweisen und trübe zu erscheinen.

Ein besonders effektives Produkt und Verfahren zeichnet sich jedoch dadurch aus, dass die haftvermittelnd und Wasser spreitend wirkenden Komponenten in einer Schicht vereinigt sind. Dadurch kann ein Verfahrensschritt eingespart werden.

In der zweiten bevorzugten Ausführungsform der vorliegenden Erfindung wird somit auf das Substrat eine wasserspreitende und haftvermittelnde Schicht b1+2) in einem Gang aufgetragen.

Diese Schicht umfasst einen Haftvermittler und ein Kolloidsol. Das Kolloidsol zur Herstellung der Schicht b1+2) entspricht dabei dem in der 1. bevorzugten Ausführungsform beschriebenen Kolloidsol.

Hinsichtlich des Haftvermittlers muss jedoch beachtet werden, dass die Haftvermittlerschicht in dieser Ausführungsform nicht vor Aufbringung der Wasser spreitenden Schicht erzeugt wird, sondern, dass in diesem Fall eine Haftvermittler-/ Kolloidsol-enthaltende Schicht aufgebracht und ausgehärtet wird. In der zweiten bevorzugten Ausführungsform der vorliegenden Erfindung werden daher bevorzugt thermisch und / oder UV-härtbare Haftvermittler eingesetzt. Ebenfalls bevorzugt ist es Sol-Haftvermittlermischungen zur Erzeugung der Schicht b1+2) einzusetzen, welche in mehreren Schritten durch unterschiedliche Initiierung, z. B. einmal thermisch und einmal durch UV-Strahlung, ausgehärtet werden können.

Als bevorzugte Haftvermittler zur Erzeugung der Schicht b1+2) werden wasserverdünnbare hydroxyfunktionelle und/oder carboxyfunktionelle Polyester, Alkydharze, Acrylharze und Polymersdispersionen, auch als Emulsionspolymerisate genannt, verwendet. Die Filmbildung erfolgt in der Regel zunächst thermisch durch Verdunstung des Wassers und gegebenenfalls des Co-Lösungsmittel. Im zweiten Schritt findet meist eine Vernetzungsreaktion statt. Im Falle der wasserverdünnbaren Polyester und Alkydharze kann die Vernetzung durch Zusatz von wasserverdünnbaren Melaminharzen oder Polyisocyanaten erfolgen. Nach ihrer Vernetzung erhalten die Filme höhere mechanische und chemische Beständigkeiten.

Besonders bevorzugt sind strahlenhärtbare Polymerdispersionen auf Basis von Polymeren hergestellt aus aliphatischen Polyurethanacrylaten. Die Vorteile dieser Stoffklasse liegen vor allem in der guten bis sehr guten Witterungsbeständigkeit und variabel einstellbaren Härte bzw. Flexibilität. So können die Beschichtungseigenschaften durch gezieltes Auswählen von Rohstoffen leicht an die Anwendungsanforderungen angepasst werden. Die Herstellung erfolgt in der Regel durch Umsetzung isocyanatfunktioneller Präpolymere mit hydroxyfunktionellen Acrylestern.

Die Größe der Polyurethanteilchen liegt in der Regel zwischen etwa 30 nm und 1000 nm wodurch sie ein milchig weißes Aussehen bewirken. Je kleiner die Teilchen desto transparenter erscheint die Dispersion. Der Festkörperanteil in handelsüblichen Polyurethandispersionen beträgt typischenweise 30 bis 50 Gew.-%. Zu den größten Anbieter von strahlenhärtbaren Polyurethandispersionen zählen die Hersteller BASF (D), Bayer MaterialScience (D), Cytec (USA), Dai Nippon Ink (Japan), Dow Chemical (USA), DSM (NL).

Im ersten Schritt verdampfen das Wasser und gegebenenfalls Colöser. Der zweite Härtungsschritt ausgelöst durch UV-Bestrahlung verleiht der Beschichtung ihre Endeigenschaften. Die Trocknung der Filme kann bei Raumtemperatur oder auch bei erhöhten Temperaturen geschehen, wenn es das Substrat zulässt.

Die Schichtdicke der Sol-Haftvermittlerschicht b1+2) beträgt 1 µm bis 50 µm, bevorzugt 2 µm bis 30 µm und besonders bevorzugt 3 µm bis 20 µm. Zu hohe Schichtdicken erfordern längere Trocknungszeit und meist auch eine höhere Trocknungstemperatur. Zu niedrige Schichten lassen sich leicht durch mechanische Beanspruchung verletzen und können dabei ihre Haftvermittlung verlieren.

An die Wasser spreitende Schicht b2) oder b1+2) schließt sich eine photokatalytisch wirksame Schicht b3) an. Diese ist durch Aufbringen und Trocknen einer Mischung erhältlich aufweisend bezogen auf den Feststoffanteil der Mischung in Gewichtsprozent b31) 2 bis 15 % Titandioxid und b32) 85 bis 98 % Siliziumdioxid und/oder eines nicht wasserlöslichen Metalloxids oder eines anionisch modifizierten Siliziumdioxids oder Metalloxids; wobei das Titandioxid partikelförmig ist mit einer mittleren Partikelgröße der Primärpartikel von kleiner als 10 nm und bevorzugt einem Anteil der Rutil-Modifikation von maximal 50 Gew. %.

Die photokatalytisch wirksame Schicht b3) umfasst als Bestandteile in einem ausgewählten Mengenverhältnisse b31) Titandioxidpartikel und b32) solche Materialien, welche auch die Wasser spreitende Schicht b1+2) oder b2) ausmachen. Hierbei handelt es sich um eine besonders zweckmäßige Ausgestaltung der Erfindung, weil die Verwendung einer zur Wasser spreitenden Schicht b1+2) oder b2) identischen Matrix einerseits logistisch einfach und andererseits sinnvoll ist insofern die Haftung zwischen b1+2) oder b2) und b32) dadurch hervorragend ist und sich der Einsatz eines weiteren Primers, Haftvermittlers oder dergleichen erübrigt.

Die Anteile and Titandioxidpartikeln und Matrixpartikeln innerhalb der eigentlich photokatalytisch wirksamen Schicht b3) haben sich als kritisch erwiesen. Liegt der Anteil an Titandioxidpartikeln b31) unter 1 Gew.-% so besteht die Gefahr, dass die bewuchshemmende Wirkung der photokatalytischen Beschichtung b) nur unzureichend ausgeprägt ist, um anfängliches Algenwachstum wirkungsvoll zu verhindern oder zu verringern. Beträgt der Anteil an Titandioxidpartikeln b31) mehr als 25 Gew.-% so kann es geschehen, dass die vorzugsweise als Matrix fungierenden Siliziumdioxidpartikel b32) nicht mehr in der Lage sind, die Titandioxidpartikel b31) so dauerhaft und fest einzuschließen, dass ein "Kreiden" der Titandioxidpartikel sicher unterdrückt werden kann. Erfindungsgemäß liegt der Anteil der Titandioxidpartikel b31) im Bereich von 2 bis 15 Gew.-%. Bevorzugt beträgt deren Anteil 3 bis 10 Gew.-%. Besonders zweckmäßig sind Gehalte zwischen 4 und 8 Gew.-%. Eine optimale Balance zwischen Wirksamkeit oder Aktivität einerseits und Matrixbindung andererseits wird mit Anteilen im Bereich von 5 bis 7,5 Gew.-% Titandioxidpartikel b31) erhalten.

Komplementär zu den genannten Anteilen verhalten sich die Mengen an Matrixpartikeln b32). Der Anteil der Matrixpartikel b32) liegt im Bereich von 85 bis 98 Gew.-%. Noch mehr bevorzugt beträgt deren Anteil 90 bis 97 Gew.-%. Besonders zweckmäßig sind Gehalte zwischen 92 und 96 Gew.-%. Eine optimale Balance zwischen Wirksamkeit oder Aktivität einerseits und Matrixbindung andererseits wird mit Anteilen im Bereich von 92,5 bis 95 Gew.-% Matrixpartikeln b31) erhalten.

Dabei haben sich auch spezielle Verhältnisse von Titandioxidpartikeln b31): Matrixpartikeln b32) als besonders vorteilhaft erwiesen. Erfindungsgemäß sind Mengenverhältnisse von 1 : 99 bis 1 : 3 möglich. Bevorzugt sind jedoch Mengenverhältnisse im Bereich von 1 : 16 bis 1 : 6. Optimal sind Mengenverhältnisse im Bereich von etwa 1 : 12 bis 1 : 7.

Die in der photokatalytisch aktiven Schicht b3) enthaltenen Titandioxidpartikel müssen essentiell bestimmte Eigenschaften aufweisen, um für die Erfindung brauchbar zu sein. So ist es von Bedeutung, dass die Titandioxidpartikel eine mittlere Partikelgröße der Primärpartikel von kleiner als 10 nm aufweisen.

Die mittlere Partikelgröße der Primärpartikel des Titandioxids bestimmt sich folgendermaßen: Titandioxidpartikel werden mit einem Elektronenmikroskop (EM) gescannt. Die mittlere Partikelgröße der Primärpartikel ergibt sich als Zahlenmittel aus 100 Messungen. Gemessen wird jeweils die Länge von 100 verschiedenen zufällig ausgewählten Primärpartikeln. Üblicherweise liegen die Primärpartikel kugelförmig vor. Allerdings sind auch nicht kugelförmige Partikel mit Erfolg verwendbar. Bei solchen nicht kugeligen Partikeln, beispielsweise asphärischen oder z.B. elliptischen Partikeln, wird der mittlere Partikeldurchmesser bestimmt, indem man jeweils die Längsachse und die kürzeste Achse misst, die Ergebnisse addiert und durch zwei teilt.

Es hat sich nun im Rahmen umfangreicher experimenteller Untersuchungen herausgestellt, dass sich Titandioxidpartikel, deren mittlere Partikelgröße der Primärpartikel 10 nm oder größer ist, nicht oder nur schwer als photokatalytisch wirksame Bestandteile in der Schicht b3) einsetzen lassen. Insbesondere neigen Partikel mit einem mittleren Partikeldurchmesser von 10 nm oder größer zu einer entweder gar nicht oder unzureichend kontrollierbaren Aktivität, welche auf Dauer zu einer Schädigung des organischen Kunststoffsubstrats führt. Zwar ist die bewuchshemmende Wirksamkeit von größeren Titandioxidpartikeln im Allgemeinen ausgezeichnet, es müssen jedoch aufwändige Maßnahmen zum Schutz der Substrate ergriffen werden, so dass das Ziel eine wirksame aber einfache Beschichtung nach einem einfachen Verfahren aufzubringen nicht verwirklicht werden kann.

Mit besonderem Erfolg lassen sich Titandioxidpartikel einsetzen, deren mittlere Partikelgröße der Primärpartikel im Bereich von 1 nm bis kleiner 10 nm liegt. Unterhalb eines mittleren Partikeldurchmessers von 1 nm kann die Handhabbarkeit eingeschränkt sein und/oder die bewuchshemmende Aktivität der Partikel reicht nicht aus, um Algenwachstum in der Anfangsphase hinreichend wirksam zu bekämpfen. Von besonderem Interesse für die Erfindung sind Titandioxidpartikel mit einer mittleren Partikelgröße der Primärpartikel im Bereich von größer als 2 nm bis 10 nm. Noch mehr bevorzugt sind mittlere Partikelgrößen der Primärpartikel im Bereich von 4 bis 9 nm.

Neben dem mittleren Partikeldurchmesser spielt auch die räumliche Konfiguration der Titandioxidpartikel eine für die Erfindung nicht unwesentliche Rolle. Je nach Verknüpfung der Oktaeder tritt Titandioxid in verschiedenen Modifikationen auf. Von der so genannten Anatas-Modifikation ist bekannt, dass sie photokatalytisch aktiv ist. Von der so genannten Rutil-Modifikation ist bekannt, dass sie im Wesentlichen photokatalytisch inaktiv ist. Es hat sich nun im Rahmen der Erfindung überraschend herausgestellt, dass auch Titandioxide mit einer Kristallstruktur aus Rutil-Modifikation und Anatas-Modifikation bzw. weiteren Kristallmodifikationen eingesetzt werden können, sofern der Anteil der Rutil-Modifikation maximal 50 Gew. %, bevorzugt maximal 40 Gew. %, besonders bevorzugt maximal 30 Gew. %, ganz besonders bevorzugt mit 0,01 bis 30 Gew. % nicht übersteigt. Es hat sich nämlich gezeigt, dass ein zu hoher Rutil Anteil zu einer Verringerung der Lebensdauer des Kunststoffmaterials führt. In einer bevorzugten Ausführungsform beträgt der Anteil der Anatas-Modifikation zumindest 50 Gew. %, bevorzugt zumindest 60 Gew. %, besonders bevorzugt zumindest 70 Gew. %, ganz besonders bevorzugt mit 70 bis 100 Gew. %. Ist der Anteil an Anatas kleiner als 50 Gew.-% ist die Reaktivität der Partikel im Allgemeinen nicht mehr ausreichend.

Die genannten Titandioxid-Modifikationen sind nach an sich bekannten Verfahren analysierbar und nachweisbar. Hierzu gehören unter anderem Röntgenbeugungsuntersuchungen z. B. gemäß "Quantitative x-ray diffraction analysis of rutile - anatase mixtures", Andratschke, M.; Dassler, A.; Feltz, A. Sekt. Chem., Friedrich-Schiller-Univ., Jena, Ger. Dem. Rep. Hermsdorfer Technische Mitteilungen (1990), 30(78), 2503-7. CODEN: HTMTAN ISSN: 0439-0377..

Erst die Balance aus Rutil-/Anatas-Anteil, Partikelgröße der Titandioxidpartikel und Verhältnis der Mengen an Titandioxidpartikel und Matrixpartikeln innerhalb der Schicht b3) lassen ein Produkt mit den gewünschten Eigenschaften zu, welches in einem äußerst einfachen Verfahren herstellbar ist.

Die beschriebenen Titandioxidpartikel können nach an sich bekannten Verfahren hergestellt werden oder sind kommerziell erhältlich.

Wertvolle Hinweise zur Herstellung von brauchbaren Titandioxidpartikeln mit der entsprechenden Partikelgröße sowie dem erforderlichen Anteil an Anatas findet man in der Literatur, beispielsweise in Patenten den Firmen Toto, Showa-Denko oder den Veröffentlichungen der *Japanese Association ofPhotocatalytic Products (JAPP).*

Zu mit besonderem Erfolg einsetzbaren Titandioxidpartikel gehören in einer nicht abschließenden Aufzählung unter anderem Produkte der Firmen Showa Denko, Nadico, Evonik-Degussa und andere.

Besonders bevorzugte Ausführungsformen der Erfindung sind dadurch gekennzeichnet, dass b1+2) bzw. b2) und b32) Siliziumdioxid mit denselben Eigenschaften sind. Hierunter wird verstanden, dass die Wasser spreitende Schicht b1+2) bzw. b2) ebenso wie die Matrixsubstanz für die photokatalytisch wirksame Schicht b3) auf einem Siliziumdioxid aus derselben Quelle mit denselben Eigenschaften beruhen.

Ein bedeutsamer Vorteil der Erfindung beruht unter anderem auf einem schonenden Umgang mit Ressourcen. Dies zeigt sich unter anderem in einem sehr geringen Materialverbrauch. So zeichnet sich ein bevorzugtes Kunststoffmaterial gemäß der ersten bevorzugten Ausführungsform der Erfindung dadurch aus, dass die Haftvermittlerschicht b1) eine Dicke im Bereich von 0,01 bis 2 µm aufweist; die Wasser spreitende Schicht b2) eine Dicke im Bereich von 0,01 bis 2 µm aufweist; und die photokatalytisch wirksame Schicht b3) eine Dicke im Bereich von 0,01 bis 1 µm aufweist; wobei die Gesamtdicke der Schichten b2) und b3) nicht größer als 2 µm ist.

Noch mehr bevorzugt ist auch die Gesamtdicke aller drei Schichten b1) + b2) + b3) nicht größer als 2 µm.

Weiters zweckmäßig sind Kunststoffmaterialen, bei denen das Verhältnis der Dicken von b3) zu b2) im Bereich von 0,05 bis 0,5 liegt.

Ein bevorzugtes Kunststoffmaterial gemäß der zweiten bevorzugten Ausführungsform der Erfindung zeichnet sich dadurch aus, dass die Sol-Haftvermittlerschicht b1+2) eine Dicke im Bereich von 1 bis 50 µm, bevorzugt 2 bis 30 µm, besonders bevorzugt 3 bis 20 µm aufweist; und die photokatalytisch wirksame Schicht b3) eine Dicke im Bereich von 0,01 bis 1,0 µm, bevorzugt 0,02 bis 0,5 µm und besonders bevorzugt 0,03 bis 0,3 µm aufweist; wobei die Gesamtdicke der Schichten b1+2) und b3) nicht größer als 51 µm, bevorzugt nicht größer als 50 µm und besonders bevorzugt nicht größer als 40 µm ist.

Die zuvor genannten Schichtdicken sind insofern wichtig, dass ausreichende Haftung auf dem Substrat und Langlebigkeit erzielt wird. Eine ausreichende Dicke der ersten Schicht gewährleistet Schutz des Substrats vor dem photokatalytischen Angriff der zweiten Schicht. Die Transparenz und Klarheit der Gesamtschicht wird durch Unterschreiten einer vorgegebenen Maximaldicke der zweiten Schicht gewährleistet. Die Hydrophilie und photokatalytische Wirksamkeit werden durch Überschreiten der angegebenen Mindestdicke der photokatalytischen Schicht gewährleistet.

In einer weiterhin bevorzugten Abwandlung zeichnet sich das Kunststoffmaterial gemäß der Erfindung dadurch aus, dass es über der photokatalytisch wirksamen Schicht b3) eine weitere wasserlösliche Beschichtung b4) und eine daran abziehbar haftende Schutzfolie b5) aufweist. Für den Transport vom Herstellungsbetrieb zum Anwendungsort werden die Oberflächen starrer Kunststoffkörper meistens durch eine schwach haftende, leicht abziehbare Folie b5) geschützt. Die Schutzfolie b5) kann aus Papier oder Kunststoff bestehen; bevorzugt sind Polyolefinfolien. Es hat sich gezeigt, dass dafür gebräuchliche Schutzfolien, die eine Haftkleberschicht aufweisen, stärker als erwünscht an der beschichteten Kunststoffoberfläche haften. Um das Abziehen der Schutzfolie am Anwendungsort zu erleichtern, kann auf die photokatalytisch wirksame Schicht b3), eine weitere dünne Schicht b4) aus einem wasserlöslichen Material aufgetragen werden. Geeignet sind beispielsweise Dextrine, Celluloseether, Natriumpolyacrylat und - methacrylat, Polyvinylalkohol oder Gelatine. Von diesen Zwischenschichten lässt sich die Schutzfolie b5) leicht abziehen. Die wasserlösliche Zwischenschicht b4) braucht nicht entfernt zu werden, da sie selbst Wasser spreitend wirkt. Sie geht mit der Zeit mit abfließendem Kondenswasser verloren und lässt dann die erfindungsgemäße, dauerhaft Wasser spreitende und photokatalytisch wirksame Beschichtung zurück.

Besonders bevorzugt sind daher im Rahmen der Erfindung Kunststoffmaterialien, die dadurch gekennzeichnet, dass sie über der photokatalytisch wirksamen Schicht b3) eine weitere wasserlösliche Beschichtung b4) und eine daran abziehbar haftende Schutzfolie b5) aufweisen.

Die erfindungsgemäßen Kunststoffmaterialien zeichnen sich unter anderem durch eine gute Wirksamkeit gegen einen anfänglichen Algenbewuchs aus. Insbesondere sind sie in bevorzugter Ausführungsform gekennzeichnet durch eine Hemmung des anfänglichen Algenwachstums im Bereich von 75 bis 90 % gemessen im standardisierten Test des Algenbewuchses nach UV-Bestrahlung und Bewitterung.

Gegenstand der Erfindung ist auch ein Verfahren zur in Linie Herstellung eines flächigen Kunststoffmaterials mit auf wenigstens einer Oberfläche verringerter Veralgungsneigung umfassend die Extrusion und in Linie Beschichtung eines thermoplastischen Kunststoffsubstrats, bei welchem Verfahren man nacheinander
A) ein thermoplastisches Kunststoffsubstrat als Grundkörper extrudiert; dann entweder
B) auf eine Oberfläche des extrudierten 40° - 70° C warmen Grundkörpers eine Lösung eines in Wasser nicht löslichen und im Wesentlichen nicht quellbaren, in organischen Lösungsmitteln löslichen organischen Polymermaterials mit einem Gehalt an polaren Gruppen aufbringt und trocknet;
C) auf die trockne 40° bis 70° C warme Schicht B) eine wässrige Lösung eines anorganischen Kolloidsols aufbringt und bis zu einem Restfeuchtegehalt von kleiner als ein Gewichtsprozent Wasser antrocknet;
oder anstelle der Schritte B) und C) in Schritt
B1+2) auf eine Oberfläche des extrudierten 40° - 70° C warmen Grundkörpers eine Mischung aus einem Haftvermittler und einem anorganischen Kolloidsol aufbringt und trocknet und/oder aushärtet
wobei das Verfahren dadurch gekennzeichnet ist, dass man
D) auf die 40° bis 70° C warme, optional, insbesondere bei durch Trocknung härtenden Haftvermittlern, noch restfeuchte, Schicht aus Schritt C) oder B1+2) eine wässrige Lösung einer Mischung aufweisend bezogen auf den Feststoffanteil der Mischung in Gewichtsprozent 2 bis 15 % Titandioxid und 85 bis 98 % Siliziumdioxid und/oder eines nicht wasserlöslichen Metalloxids oder eines anionisch modifizierten Siliziumdioxids oder Metalloxids aufbringt und trocknet;
wobei das Titandioxid in Partikelform vorliegt und eine mittlere Partikelgröße der Primärpartikel von kleiner als 10 nm hat und bevorzugt einen Anteil der Rutil-Modifikation von maximal 50 Gew. % aufweist.

Beim Beschichtungsverfahren der Erfindung handelt es sich um ein in Linie Verfahren. Hierunter ist die Beschichtung in einer Linie unmittelbar anschließend an die Herstellung des flächigen Kunststoffsubstrats, vorzugsweise durch Extrusion, zu verstehen. Die einzelnen Schichten der Beschichtung werden konsekutiv aufgetragen und jeweils so zügig gehärtet und getrocknet, dass ein Auftragen der nächstfolgenden Schicht den Erfolg der Beschichtung nicht gefährdet.

Die haftvermittelnde Schicht b1) kann aus einer wässrigen Dispersion oder einer organischen Lösung des Überzugsmittels aufgebracht werden. Wegen der außerordentlich geringen Dicke der Schicht kann die Dispersion oder Lösung in stark verdünnter Form aufgetragen werden. Konzentrationen von 0,1 % bis 40 %, vorzugsweise 1 -10 %, sind zweckmäßig. Das flüssige Beschichtungsmittel kann durch Streichen, Gießen, Walzenauftrag, Sprühen oder andere bekannte Methoden aufgebracht werden. Die aufgetragene Beschichtungsflüssigkeit kam erforderlichenfalls mit einer Rakel, z. B. einer Draht-, Zahn-, Gummi- oder Luftrakel, gleichmäßig verteilt werden. Unmittelbar nach dem Auftrag wird die flüssige Komponente verdampft, beispielsweise in einem Warmluft-Trockner.

Anschließend wird in gleichartiger Weise die Wasser spreitende Schicht (Oxidschicht) b2) aufgebracht. Vorzugsweise wird eine kolloidale wässrige Lösung bzw. Dispersion des Oxids aufgetragen. Es ist auch möglich, eine Verbindung des Siliziums oder des Metalls aufzutragen, die auf der beschichteten Oberfläche hydrolysiert wird. Beispielsweise kann eine Lösung eines Orthokieselsäureesters in schwach angesäuertem Alkohol aufgetragen werden. Der Ester hydrolysiert während oder nach dem Trocknen der Beschichtung. Es ist zweckmäßig, dass die Beschichtungsflüssigkeit eine geschlossene Schicht bildet, was erforderlichenfalls durch Zugabe - vorzugsweise nicht-ionischen - Tensiden gefördert werden kann. Als Tenside eignen sich beispielsweise oxäthylierte Fettalkohole in einer Konzentration von 2 bis 20 Gew.-% Tensid, bezogen auf den Oxidgehalt, vorzugsweise 3 bis 5 Gew.-%. Vorzugsweise wird nicht mehr von dem Tensid eingesetzt als zur gleichmäßigen Benetzung gerade ausreicht. Das Wasser wird anschließend verdampft, wiederum vorzugsweise in einem Warmluft-Trockner. Dabei steigt die Temperatur in der Beschichtung meist nicht über 50 bis 60°C an. Die Abriebfestigkeit und Haftung werden nochmals spürbar verbessert, wenn die getrocknete Beschichtung noch einige Zeit höher erwärmt wird, beispielsweise wenigstens 3, vorzugsweise 5 bis 10 min auf über 80°C. Je nach der Art des Kunststoffes können Temperaturen bis über 100°C angewandt werden, gegebenenfalls bis zu 150°C.

In der zweiten bevorzugten Ausführungsform der vorliegenden Erfindung wird, in gleichartiger Weise wie die Wasser spreitende Schicht (Oxidschicht) b2) in der 1. bevorzugten Ausführungsform auf die Schicht b1), eine haftvermittelnde und wasserspreitende Sol-Haftvermittlerschicht b1+2), hier jedoch auf das Substrat, aufgetragen.

Es ist zweckmäßig, dass die Beschichtungsflüssigkeit dabei eine geschlossene Schicht bildet, was erforderlichenfalls durch Zugabe von - vorzugsweise nicht-ionischen - Tensiden gefördert werden kann. Als Tenside eignen sich beispielsweise oxäthylierte Fettalkohole in einer Konzentration von 2 bis 20 Gew.-% Tensid, bezogen auf den Oxidgehalt, vorzugsweise 3 bis 5 Gew.-%. Vorzugsweise wird nicht mehr von dem Tensid eingesetzt als zur gleichmäßigen Benetzung gerade ausreicht. Das Wasser wird anschließend verdampft, wiederum vorzugsweise in einem Warmluft-Trockner. Dabei steigt die Temperatur in der Beschichtung meist nicht über 50 bis 60°C an. Die Abriebfestigkeit und Haftung werden nochmals spürbar verbessert, wenn die getrocknete Beschichtung noch einige Zeit höher erwärmt wird, beispielsweise wenigstens 3, vorzugsweise 5 bis 10 min auf über 80°C. Je nach der Art des Kunststoffes können Temperaturen bis über 100°C angewandt werden, gegebenenfalls bis zu 150°C. Bei ausreichend dünner Schicht und genügend langer Strecke genügt bevorzugt auch die Restwärme der Platte zur Trocknung und Verdampfung der flüchtigen Komponenten. Im Falle strahlenhärtbarer Polymerdispersionen kann sich an den Trocknungsschritt noch ein Härtungsschritt durch Bestrahlung mit Licht geeigneter Wellenlänge, z.B. UV-Licht anschließen.

Daran anschließend wird auf gleiche Weise wie die Schicht b1+2) bzw. b2) die photokatalytisch wirksame Schicht b3) aufgetragen.

In einer erfindungsgemäßen Abwandlung der zweiten bevorzugten Ausführungsform kann der zuvor genannte Härtungsschritt durch Bestrahlung mit Licht geeigneter Wellenlänge, z.B. UV-Licht, erst nach dem Auftragen und Trocknen der photokatalytisch wirksamen Schicht b3) erfolgen. Diese Variante erlaubt die räumliche Trennung von Beschichtungseinheit und Härtungseinheit, was sich günstig auf die platzsparende Nutzung des vorhandenen Raums in der Linie auswirkt und die Beschichtungseigenschaften, z.B. die Haftung positiv beeinflussen kann.

Die Wahl der Bestandteile der Lösungen für die einzelnen Beschichtungsschritte sowie der Konzentration der einzelnen Beschichtungslösungen richtet sich unter anderem nach der Verfahrensökonomie. So ist es in dem beschriebenen Parameterbereich möglich, die Kunststoffsubstrate in Linie zu beschichten. Das frisch extrudierte noch warme Kunststoffsubstrat weist dabei vorzugsweise über die gesamte Verfahrensdauer eine zur Härtung und Trocknung der einzelnen Schichten ohne weitere Energiezufuhr hinreichende Temperatur auf. Zudem sind die Konzentrationen der einzelnen Beschichtungslösungen zweckmäßig so gewählt, dass eine Schichtdicke der jeweiligen Schicht sowie eine Gesamtdicke im optimalen Bereich resultiert.

In zweckmäßiger Abwandlung des erfindungsgemäßen Verfahrens wird die Haftvermittlerschicht b1) in Schritt B) bzw. b1+2) in Schritt B1+2) innerhalb von 30 bis 120 Sekunden aufgebracht und getrocknet bzw. gehärtet.

Weiterhin ist eine Ausführungsform von besonderem Interesse, bei der man die Schritte C) bzw. B1+2) und D) innerhalb von zusammen 30 bis 180 Sekunden durchführt.

Daraus resultiert eine bevorzugte Verfahrensdauer für die komplette Beschichtung im Bereich von 1 Minute bis 5 Minuten, so dass das Verfahren der Erfindung sich besonders für die in Linie Durchführung eignet.

Schließlich kann es für den Transport der beschichteten Kunststoffmaterialien von Vorteil sein, wenn man im Anschluss an den Schritt D) in einem weiteren Schritt E) eine wasserlösliche Beschichtung aufbringt sowie eine daran haftende abziehbare Schutzfolie.

Aufgrund des hervorragenden Eigenschaftsprofils und insbesondere aufgrund der Kombination der Eigenschaften "Wasserspreitung" und "photokatalytische Aktivität" eignen sich die beschichten Kunststoffmaterialien der Erfindung für eine Vielzahl von Anwendungen. Besonderes Interesse geniest aber die Verwendung des Kunststoffmaterials als Bedachungs- und / oder Verglasungsmaterial. Hierbei kann das Material universell eingesetzt werden. Seine besondere Stärke kommt jedoch vorzugsweise bei der Verwendung in Feuchträumen wie Schwimmbädern, Saunen, im Außenbereich, Veranden, Gewächshäusern und Carports, Überdachung im Allgemeinen und dergleichen zum Tragen.

Besonders zweckmäßig ist die Verwendung mit verringerter anfänglicher Veralgungsneigung und/oder verringertem anfänglichen Bakterienwachstum.

Nachfolgend wird die Erfindung an Hand von Beispielen und Vergleichsbeispielen eingehender beschrieben.

### 1. Methodenbeschreibung

### Bestimmung der Beständigkeit von Beschichtungsstoffen gegen Algenbefall

### 1) Prinzip

Die Beständigkeit von Beschichtungen gegen Algenbewuchs wird in Anlehnung an die Methode der "IBRG (International Biodeterioration Research Group) - Paints Working Group, Algicidal Paints Project: A method for evaluating algicidal compounds in exterior coatings; IBRG/P98/03" bestimmt. In dieser Methode werden aeroterrestrische Mikroalgen verwendet, die in der Praxis auf Fassadenbeschichtungen auftreten. Außerdem zeichnet sich die Methode sich dadurch aus, dass die Testproben zur Feuchthaltung nicht mit einem algenhaltigem Flüssigmedium überschichtet werden, sondern die Proben in einem mit gewässertem Vermiculite gefüllten Inkubator liegen. Es tritt somit keine Diffusion zwischen Probenoberfläche und Flüssigmedium auf. Hierdurch stellt der Versuch die Situation in der Praxis möglichst sachgerecht nach.

### 2) Algengattungen und Kultivierung

Aeroterrestrische Mikroalgen Stichococcus bacillaris (SAG 379-1a) und Scenedesmus vacuolatus (SAG 211-8b) werden verwendet. Die Mikroalgen werden in der Kuhl'schen Algennährlösung bei Raumtemperatur und unter Belichtung angezüchtet. Dabei wird ein Zyklus aus jeweils 16 h Belichtung und 8 h Dunkellagerung angewendet. Die Belichtung erfolgt mit Tageslicht- Leuchtstoffröhren (L36W/965 BIOLUX FLH1).

| Kuhl'schen Algennährlösung | | Konzentration |
|---|---|---|
| I. | KNO3 | 1,011 [g/l] |
| II. | NaH2PO4 · 1H2O | 0,621 [g/l] |
| III. | Na2HPO4 · 2H2O | 0,089 [g/l] |
| IV. | MgSO4 · 7H2O | 0,247 [g/l] |
| V. | CaCl2 · 2H2O | 0,015 [g/l] |
| VI. Spurenelemente: | H3BO3 | 0,0062 [mg/l] |
| | MnSO4· 1H2O | 0,1690 [mg/l] |
| | ZnSO4· 7H2O | 0,2880 [mg/l] |
| | CuSO4· 5H2O | 0,0025 [mg/l] |
| | (NH4)6Mo7O24· 4H2O | 0,0125 [mg/l] |
| VII. | FeSO4· 7H2O | 6,950 [mg/l] |

### 3) Prüfkörper

Die Probekörper (50 x 50 x 4 mm) sind einseitig beschichtet, die unbeschichteten Seiten sind markiert. Die Prüfung wird als 4-fach Bestimmung durchgeführt.

### 4) Konditionierung der Prüfkörper

Die Prüfkörper werden zuerst mit VE-Wasser abgespült. Anschließend werden die Prüfkörper mit UV- Licht (Philips Leuchtstofflampe TL-D 18W/08/BLB) bei Raumtemperatur über Nacht bestrahlt.

### 5) Inkubator

Der transparente und UV durchlässige PLEXIGLAS® Inkubator (350x250x200 mm) wird zuerst mit 70% Ethanol desinfiziert und dann wird zu 1/3 mit gewässertem und autoklaviertem Vermiculite gefüllt. Die Prüfkörper sollen nicht direkt auf gewässertem Vermiculite, sondern auf einem Gestell mit einem Winkel von 5° (Bezug auf mind. Dachneigung) liegen. Die Luftfeuchtigkeit im Inkubator liegt bei ca. 90 %.

### 6) Beimpfung und Bebrütung

Hierzu werden die Prüfkörper mit einer sterilen Pinzette auf ein Gestell mit Winkel von 5° gelegt.

Es ist darauf zu achten, dass die beschichteten Probenflächen nach oben sind. Vor Beimpfung werden die Prüfkörper mit Kuhl'scher Algennährlösung (700µl/Prüfkörper) besprüht. Die Beimpfung einer Probe mit 700 µl Algenmischsuspension mit einer Zellkonzentration von 10⁶/ml erfolgt mittels Chromatographie-Reagenzglaszerstäuber. Die Algenzellkonzentration in der so erhaltenen Algensuspension wird mittels Zählkammer Neubauer improved bestimmt. Es werden von jeder Beschichtungsvariante 4 Proben parallel untersucht. Die Inkubation findet bei Wechsel von 16 Stunden Licht (Tageslicht ca.1000 Lux, UV-A 8 W/m²) und 8 Stunden Dunkelheit bei Raumtemperatur statt. Die Luftfeuchtigkeit im Inkubator liegt bei ca. 90 %. Das Algenwachstum wird 7 und 14 Tage nach der Beimpfung kontrolliert. Nach 14 Tage werden die Prüfkörper erneut besprüht, beimpft und unter denselben Bedingungen für weitere 14 Tage inkubiert.

### 7) Auswertung

Die Auswertung des Algenbewuchses erfolgt durch quantitative Bildanalyse, nachdem die bewachsenen Prüfkörper mit einem Flachbettscanner (Epson Perfection V750 Pro) im Durchlicht eingescannt werden. Der Bewuchsgrad entspricht der Summe der von Algen bewachsenen Bildfläche dividiert durch die gesamte Bildfläche.

### 2. Beispiele und Vergleichsbeispiele

### 2.1 Herstellung der Beschichtung

### 2.1.1 Herstellung der Wasser spreitenden Beschichtung

### A) Herstellung einer Beschichtung mit einer haftvermittelnden Schicht b1) und einer Wasser spreitenden SiO₂-Schicht b2)

Ein Copolymer aus 87,6 % Methylmethacrylat und 12,4 % gamma-Methacryloyloxypropyl-trimethoxysilan wurde in Butylacetat gelöst, wobei der Feststoffgehalt 0,7 Gew.-% betrug, und mit Handschuhstoff in einer dünnen Schicht auf 50°C warme PMMA-Platten aufgetragen. Die beschichtete Platte kann unmittelbar nach dem Trocknen mit der nächsten Schicht beschichtet werden.

25 Gewichtsteile eines anionischen Kieselsols (Feststoffgehalt 30 %; Levasil erhältlich von H.C.Starck) werden mit 0,4 Gewichtsteilen eines ethoxylierten Fettsäurealkohols (Genapol X80) mit vollentsalztem Wasser zu 100 Gewichtsteilen ergänzt, und mit Handschuhstoff in dünner Schicht auf die 50°C warme mit der haftvermittelnden Schicht versehene Platte beschichtet. Nach dem Ablüften und Trocknen wird die mit haftvermittelnder Schicht und SiO₂-Schicht versehene Platte sofort mit der photokatalytischen Schicht beschichtet.

### B) Herstellung einer Beschichtung mit einer haftvermittelnden und Wasser spreitenden Sol-Haftvermittlerschicht b1+2)

Eine Beschichtungszusammensetzung (Lack) bestehend aus

| | |
|---|---|
| Ucecoat 7849 (Polyurethandispersion der Fa. Cytec): | 49 Gew. % |
| Ludox AM (Kieselsol, wässrige kolloidale Suspension von SiO2): | 49 Gew. % |
| Irgacure 819 DW: | 2 Gew. % |

wird mit Handschuhstoff in einer dünnen Schicht mit einer Dicke von 15 µm auf eine 60 °C warme PMMA-Platte aufgetragen. Nach dem Auftrag erfolgt zunächst eine thermische Trocknung der Lackschicht. Bei Trocknungstemperaturen im Bereich 40°-80° C. Dabei bildet sich ein Polymernetzwerk aus. Anschließend erfolgt in einem zweiten Schritt eine UV-Härtung. Erst nach der zweiten Härtung erreicht die Beschichtung b1+2) ihre Endeigenschaften.

### 2.1.2 Herstellung der photokatalytischen Schicht

### 2.1.2.1 Mit Titandioxid in Anatas Modifikation

A) 50 Gewichtsteile einer 0,8 prozentigen wässrigen Dispersion von Titandioxid (Anatas) mit einer mittleren Teilchengröße < 8 nm und einer spezifischen Oberfläche 160 +/- 30 qm/g, hergestellt durch einen hydrosynthetischen Prozess, 12,5 Gewichtsteile eines anionischen Kieselsols (Feststoffgehalt 30 %; Levasil erhältlich von H.C.Starck) werden mit 0,4 Gewichtsteilen eines ethoxylierten Fettsäurealkohols (Genapol X80) mit vollentsalztem Wasser zu 100 Gewichtsteilen ergänzt, und mit Handschuhstoff in dünner Schicht auf die 50°C warme mit der SiO₂-Schicht versehene Platte gemäß 2.1.1 A) beschichtet. Nach dem Ablüften und Trocknen kann die mit haftvermittelnder Schicht und Wasser spreitender Schicht versehene Platte sofort mit der wasserlöslichen Schutzschicht beschichtet werden.
B) Es wird wie unter A) verfahren, jedoch werden nur 25 Teile der 0,8 prozentigen wässrigen Dispersion von Titandioxid verwendet und mit Wasser zu 100 Teilen ergänzt.

Die anwendungstechnischen Ergebnisse der derart beschichteten Platten werden weiter unten aufgeführt.

### 2.1.2.2 Mit Titandioxid in Rutil/Anatas Modifikation

A) 50 Gewichtsteile einer 0,8 prozentigen wässrigen Dispersion von a) 75 Teilen Titandioxid (Anatas) mit einer mittleren Teilchengröße < 8 nm und einer spezifischen Oberfläche 160 +/- 30 qm/g, hergestellt durch einen hydrosynthetischen Prozess und b) 25 Teilen Titandioxid (Rutil) mit einer mittleren Teilchengröße < 10 nm hergestellt durch einen lösungsbasierten Prozess nach Q.-H. Zhang, L. Gao and J.-K Guo, NanoStructured Materials, Vol. 11, No. 8, pp. 1293-1300, 1999, PREPARATION AND CHARACTERIZATION OF NANOSIZED TiO₂ POWDERS FROM AQUEOUS TiCl4 SOLUTION, 12,5 Gewichtsteile eines anionischen Kieselsols (Feststoffgehalt 30 %; Levasil erhältlich von H.C.Starck) werden mit 0,4 Gewichtsteilen eines ethoxylierten Fettsäurealkohols (Genapol X80) mit vollentsalztem Wasser zu 100 Gewichtsteilen ergänzt, und mit Handschuhstoff in dünner Schicht auf die 50°C warme mit der SiO₂-Schicht versehene Platte aus 2.1.1. A) beschichtet. Nach dem Ablüften und Trocknen kann die mit haftvermittelnder Schicht und Wasser spreitender Schicht versehene Platte sofort mit der wasserlöslichen Schutzschicht beschichtet werden.
B) Es wird wie unter A) verfahren, jedoch werden nur 25 Teile der 0,8 prozentigen wässrigen Dispersion von Titandioxid verwendet und mit Wasser zu 100 Teilen ergänzt.

Die Platten gemäß 2.1.2.2 A und B zeigten nach Beschichtung mit der wasserlöslichen Schutzschicht gemäß 2.1.3 unten, gute photokatalytische Wirkungen, d.h. einen deutlich verringerten Algenbewuchs. Nach künstlicher Bewitterung im Xenotest über 700 h wurde nur eine sehr geringe Trübung der Platte, d.h. geringe Schädigung durch photokatalytische Zersetzung, gefunden.

### 2.1.3 Herstellung der wasserlöslichen Schutzschicht (Optional)

Um die Haftung einer Kaschierfolie auf der Beschichtung zu reduzieren, kann als vierte Schicht eine Lösung eines wasserlöslichen Polymeren in dünner Schicht aufgetragen werden. Geeignete Polymere sind: Dextrine, Cellulose-ether, Natriumpoly(meth)acrylat, Polyvinylalkohol, Gelatine oder teilacetylierte Stärke. Nach dem Auftragen des wasserlöslichen Polymers kann die beschichtete Platte mit einer handelsüblichen Schutzfolie kaschiert werden.

### 2.2 Vergleichsbeispiele

### 2.2.1 Vergleichsbeispiel ohne photokatalytische Schicht

Es wird wie unter 2.1 beschrieben verfahren, jedoch wird die dritte Beschichtung (photokatalytische Schicht) weggelassen.

### 2.2.2 Vergleichsbeispiel mit großen Titandioxidpartikeln in der photokatalytischen Schicht

A) Es wird wie unter 2.1 beschrieben verfahren, jedoch wird anstelle der in 2.1.2 beschriebenen wässrigen Dispersion von Titandioxid eine Zusammensetzung aus 2,67 Teilen einer 30 prozentigen Titandioxiddispersion mit einer mittleren Primärteilchengröße von 14 nm und 47,33 Teilen VE-Wasser eingesetzt.
B) Es wird wie unter 2.2.2 A) verfahren, jedoch setzt man nur 1,33 Teile der Titandioxiddispersion ein und ergänzt mit Wasser auf 100 Teile.

### 2.2.3 Vergleichsbeispiel mit großen Titandioxidpartikeln in der photokatalytischen Schicht

A) Es wird wie unter 2.2.2A beschrieben verfahren, jedoch wird anstelle der genannten Titandioxiddispersion eine andere Titandioxiddispersion mit einer mittleren Primärteilchengröße von 21 nm eingesetzt.
B) Es wird wie unter 2.2.3 A) verfahren, jedoch setzt man nur 1,33 Teile der Titandioxiddispersion ein und ergänzt mit Wasser auf 100 Teile.

### 2.2.4 Vergleichsbeispiel mit einer Kombination von großen und kleinen Titandioxidpartikeln in der photokatalytischen Schicht

A) Es wird wie unter 2.2.2 A beschrieben verfahren, jedoch wird eine Kombination einer Titandioxiddispersion mit einer Aggregatgröße < 100 nm (VP Disp. W 2730 X, Anatas : Rutil = 85 : 15; Hersteller Evonik-Degussa GmbH) mit Titandioxid (Rutil) mit einer mittleren Teilchengröße < 10 nm hergestellt durch einen lösungsbasierten Prozess nach Q.-H. Zhang, L. Gao and J.-K Guo, NanoStructured Materials, Vol. 11, No. 8, pp. 1293-1300, 1999, PREPARATION AND CHARACTERIZATION OF NANOSIZED TiO₂ POWDERS FROM AQUEOUS TiCl4 SOLUTION, eingesetzt, wobei das Gewichtsverhältnis der großen zu den kleinen Teilchen 25 : 75 beträgt.
B) Es wird wie unter 2.2.4 A) verfahren, jedoch setzt man nur 1,33 Teile der Titandioxiddispersion ein und ergänzt mit Wasser auf 100 Teile.

Vergleichsbeispiele 2.2.4 A und B zeigten im anwendungstechnischen Test nach künstlicher Bewitterung im Xenotest über 700 h eine starke Trübung (Haze > 20) und somit eine starke Schädigung durch photokatalytische Zersetzung.

Um die unverfälschte Wirkung der photokatalytischen Schicht zu messen wurde die wasserlösliche Schicht aus 2.1.3 abgewaschen und die Prüfung der bewuchshemmenden Wirkung nach der Methodenbeschreibung "Bestimmung der Beständigkeit von Beschichtungsstoffen gegen Algenbefall" durchgeführt. Die Bewitterungsprüfung erfolgte nach DIN EN ISO 4892 im Xenotest mit Feucht-Trockenzyklen.

### Colour Fading Test

Zum Abschätzen der photokatalytischen Aktivität wurde der Abbau von Farbstoff (Methylenblau) auf (in) porösen Oberflächen geprüft. Dazu wurde ein Glasring mit Dichtung auf die Oberfläche platziert und mit 5 ml der Methylenblau-Lösung (6 mg/L) benetzt. Der Farbstoff dringt in die poröse Oberfläche ein. Der Überstand wird ausgeleert und der verbliebene Farbfleck mit UV/A-Licht bestrahlt. Die Ergebnisse der Entfärbung des Farbstoffes wurden visuell bestimmt, wobei "0" keiner Entfärbung und "4" einer vollständigen Entfärbung entspricht.

Die Prüfungen ergaben folgende Resultate:

**Ergebnisse (Tabelle)**

| Nr. | Bezeichnung | Algenbewuchs ohne UV-Bestrahlung | Algenbewuchs mit UV-Bestrahlung | Algenbewuchs mit UV-Bestrahlung nach Bewitterung | Bemerkung | Randwinkel vor UV-Bestrahlung | Randwinkel nach UV-Bestrahlung | Trübung vor Bewitterung | Trübung nach 700 h Bewitterung | Trübung nach 2500 h Bewitterung | Color Fading Test (48 h) |
|---|---|---|---|---|---|---|---|---|---|---|---|
| 2.1.3.1A | Beispiel | n. a. | n. a. | n.a. | Klar, transparent | n.a. | n.a. | n.a. | n.a. | n.a. | 4 |
| 2.1.3 1B | Beispiel | 48 % | 24 % | 18 % | Klar, transparent | 8° | 10° | Haze 4 % | Haze: 4% | Haze 6 % | 2 |
| 2.21 | Vergleichsbeispiel ohne TiO₂-Schicht | 48 % | 35 % | 61 % | Klar, transparent | 8° | 15° | Haze 3,5 % | n.a. | Haze 1,8 % | 1 |
| 2.2.2 B | Vergleichsbeispiel große TiO₂-Partikel | n.a. | n.a. | n.a. | trüb | 9-11° | 6-10° | Haze 10 % | Trüb; Haze 28 % | n.a. | |
| | | | | | | | | | | | |
| Saint-Gobain Bioclean | Photokatalytis ches Silikatglas | 52 % | 15 % | 17 % | Etwas trüb | 52° | 8° (nach 80 h) | n.a. | n.a. | n.a. | |
| | | | | | | | 57° (nach 20 h) | | | | |

Die photokatalytische Wirkung ist bei allen Proben mit Titandioxid messbar, jedoch wird die Beschichtung in den Vergleichsbeispielen rissig und trüb. Im Vergleichsbeispiel ohne Photokatalysator wird der Algenbewuchs nicht effektiv gehemmt.

Wirksamkeit gegen Bakterienbewuchs:
Die Wirksamkeit gegen Bakterien wurde nach ISO 27447, Fine ceramics (advanced ceramics, advanced technical ceramics) - Test method for antibacterial activity of semiconducting photocatalytic materials (First Edition 2009-06-01) bestimmt.

In der Freibewitterung geht dem Algenbewuchs häufig eine Primärbesiedlung von Bakterien voraus, die den Algen als bewuchsförderndes Substrat dienen. Die photokatalytische Schicht ist deshalb so ausgelegt, dass sie auch den Bewuchs von Bakterien verhindern kann. Als Versuchsbakterien dienten Pseudomonas aeruginosa Stamm Nr-.: ATCC 15442. Dies wird durch die folgenden Beispiele belegt:

| **Nr.** | **Bezeichnung** | **Bakterienbewuchs (KBE) ohne UV-Bestrahlung** | **Bakterienbewuchs (KBE) mit UV-Bestrahlung** |
|---|---|---|---|
| 2.1.2 B | Beispiel | 10⁶ | 10⁰ |
| 2.2 1 | Vergleichsbeispiel | 10⁶ | 10⁴ |
| Saint-Gobain Bioclean | Photokatalytisches Silikatglas | 10⁶ | 10⁰ |

## Patentansprüche

1. Beschichtetes flächiges Kunststoffmaterial mit reduzierter Neigung zur Veralgung umfassend
a) als Grundkörper ein thermoplastisches Kunststoffsubstrat; und
b) auf dem Grundkörper eine photokatalytisch wirksame Beschichtung umfassend
- eine wasserspreitende Schicht, bei der es sich
entweder um eine Sol-Haftvermittlerschicht Schicht b1+2) mit einer Schichtdicke von 1 µm bis 50 µm, umfassend einen Haftvermittler und ein Kolloidsol,
oder um eine Kolloidsolschicht b2) mit einer Schichtdicke von 0,05 µm bis 2 µm, welche auf einer auf dem Substrat a) aufgebrachten Haftvermittlerschicht b1) angeordnet ist, handelt,
und
- eine auf der wasserspreitenden Schicht b1+2) oder b2) angeordnete photokatalytisch wirksame Schicht b3),
die Titandioxid enthält und durch Aufbringen und Trocknen einer Mischung erhältlich ist, die Titandioxid und Siliziumdioxid und/oder ein nicht wasserlösliches Metalloxid oder ein anionisch modifiziertes Siliziumdioxid oder Metalloxid aufweist,
**dadurch gekennzeichnet, dass**
die wasserspreitende Schicht b2) zu mehr als 90 Gew.-% aus Siliziumdioxid und/oder einem Metalloxid besteht;
die Mischung
b31) 2 bis 15 % Titandioxid und
b32) 85 bis 98 % Siliziumdioxid und/oder eines nicht wasserlöslichen Metalloxids oder eines anionisch modifizierten Siliziumdioxids oder Metalloxids;
bezogen auf den Feststoffanteil der Mischung in Gewichtsprozent, aufweist; und
das partikelförmige Titandioxid eine mittlere Partikelgröße der Primärpartikel von kleiner als 10 nm hat, wobei zur Bestimmung der mittleren Partikelgröße Titandioxidpartikel mit einem Elektronenmikroskop (EM) gescannt werden und
die mittlere Partikelgröße der Primärpartikel des Titandioxids als Zahlenmittel aus Messungen der Länge von 100 verschiedenen zufällig ausgewählten Primärpartikeln bestimmt wird.

2. Kunststoffmaterial nach Anspruch 1,
**dadurch gekennzeichnet,**
**dass** die Haftvermittlerschicht b1) durch Aufbringen und Trocknen eines in Wasser nicht löslichen und im Wesentlichen nicht quellbaren, in organischen Lösungsmitteln löslichen organischen Polymermaterials mit einem Gehalt an polaren Gruppen erhältlich ist; und
die Wasser spreitende Schicht b2) durch Aufbringen und Trocknen eines anorganischen Kolloidsols erhältlich ist;
oder
**dass** die Sol-Haftvermittlerschicht b1+2) dadurch erhältlich ist, dass ein anorganisches Kolloidsol mit einem Haftvermittler, bevorzugt einem wässrigen strahlenhärtbaren PU-Acrylatdispersion, versetzt, auf das Substrat a) aufgetragen und getrocknet und/oder gehärtet wird.

3. Kunststoffmaterial nach Anspruch 1 oder 2,
**dadurch gekennzeichnet, dass**
das Titandioxid einen Anteil der Rutil-Modifikation von maximal 50 Gew. % aufweist.

4. Kunststoffmaterial nach einem der Ansprüche 1 bis 3,
**dadurch gekennzeichnet, dass**
die Schichten b2), b1+2) und b32) Siliziumdioxid mit denselben Eigenschaften aufweisen.

5. Kunststoffmaterial nach einem der Ansprüche 1 bis 4,
**dadurch gekennzeichnet, dass**
die Haftvermittlerschicht b1) eine Dicke im Bereich von 0,01 bis 2 µm aufweist; die Wasser spreitende Schicht b2) eine Dicke im Bereich von 0,05 bis 2 µm aufweist; und
die photokatalytisch wirksame Schicht b3) eine Dicke im Bereich von 0,01 bis 1 µm aufweist; wobei
die Gesamtdicke der Schichten b2) und b3) nicht größer als 2 µm ist,
oder dass
die Sol-Haftvermittlerschicht Schicht b1+2) eine Dicke im Bereich von 1 bis 50 µm aufweist;
und
die photokatalytisch wirksame Schicht b3) eine Dicke im Bereich von 0,01 bis 1,0 µm aufweist; wobei
die Gesamtdicke der Schichten b1+2) und b3) nicht größer als 51 µm ist.

6. Kunststoffmaterial nach einem der vorhergehenden Ansprüche,
**dadurch gekennzeichnet, dass**
das Verhältnis der Dicken von b3) zu b2) im Bereich von 0,05 bis 0,5 liegt.

7. Kunststoffmaterial nach einem der vorhergehenden Ansprüche,
**dadurch gekennzeichnet, dass** es
über der photokatalytisch wirksamen Schicht b3) eine weitere wasserlösliche Beschichtung b4) und eine daran abziehbar haftende Schutzfolie b5) aufweist.

8. Verfahren zur in Linie Herstellung eines flächigen Kunststoffmaterials nach mindestens einem der Ansprüche 1 bis 7 mit auf wenigstens einer Oberfläche verringerter Veralgungsneigung umfassend die Extrusion und in Linie Beschichtung eines thermoplastischen Kunststoffsubstrats, wobei man nacheinander
A) ein thermoplastisches Kunststoffsubstrat als Grundkörper extrudiert; dann entweder
B) auf eine Oberfläche des extrudierten 40° - 70° C warmen Grundkörpers eine Lösung eines in Wasser nicht löslichen und im Wesentlichen nicht quellbaren, in organischen Lösungsmitteln löslichen organischen Polymermaterials mit einem Gehalt an polaren Gruppen aufbringt und trocknet;
C) auf die trockene 40° bis 70° C warme Schicht B) eine wässrige Lösung eines anorganischen Kolloidsols aufbringt und bis zu einem Restfeuchtegehalt von kleiner als ein Gewichtsprozent Wasser antrocknet;
oder
B1+2) auf eine Oberfläche des extrudierten 40° - 70° C warmen Grundkörpers eine Mischung aus einem Haftvermittler und einem anorganischen Kolloidsol aufbringt und trocknet und/oder aushärtet
**dadurch gekennzeichnet, dass** man
D) auf die 40° bis 70° C warme, optional restfeuchte, Schicht C) oder B1+2) eine wässrige Lösung einer Mischung aufweisend bezogen auf den Feststoffanteil der Mischung in Gewichtsprozent 2 bis 15 % Titandioxid und 85 bis 98 % Siliziumdioxid und/oder eines nicht wasserlöslichen Metalloxids oder eines anionisch modifizierten Siliziumdioxids oder Metalloxids aufbringt und trocknet;
wobei das Titandioxid in Partikelform vorliegt und eine mittlere Partikelgröße der Primärpartikel von kleiner als 10 nm hat.

9. Verfahren nach Anspruch 8, **dadurch gekennzeichnet, dass** das Titandioxid einen Anteil der Rutil-Modifikation von maximal 50 Gew. % aufweist.

10. Verfahren nach Anspruch 8 oder 9, **dadurch gekennzeichnet, dass** man die im Schritt B) oder B1+2) aufgebrachte Schicht innerhalb von 30 bis 120 Sekunden aufbringt und trocknet.

11. Verfahren nach einem der Ansprüche 8 bis 10, **dadurch gekennzeichnet, dass** man Die Schritte C) bzw. B1+2) und D) innerhalb von zusammen 30 bis 180 Sekunden durchführt.

12. Verfahren nach einem der Ansprüche 8 bis 11, **dadurch gekennzeichnet, dass** man im Anschluss an den Schritt D) in einem weiteren Schritt E) eine wasserlösliche Beschichtung aufbringt sowie eine daran haftende abziehbare Schutzfolie.

13. Verwendung des Kunststoffmaterials gemäß den Ansprüchen 1 bis 7 oder erhältlich gemäß den Ansprüchen 8 bis 12 als Bedachungs- und / oder Verglasungsmaterial.

14. Verwendung nach Anspruch 13 in Feuchträumen.

## Claims

1. Coated sheet-like plastics material with reduced tendency toward algal colonization comprising
a) as base, a thermoplastic substrate; and
b) on the base, a photocatalytically active coating comprising
- a water-spreading layer which involves
either a sol-adhesion-promoter layer, layer b1+2), having a layer thickness of 1 µm to 50 µm, comprising an adhesion promoter and a colloid sol,
or a colloid-sol layer b2) having a layer thickness of 0.05 µm to 2 µm arranged on an adhesion-promoter layer b1) applied on the substrate a),
and
- a photocatalytically active layer b3) arranged on the water-spreading layer b1+2) or b2),
where b3) contains titanium dioxde and is obtainable through application and drying of a mixture comprising titanium dioxide and silicon dioxide and/or a water-insoluble metal oxide or an anionically modified silicon dioxide or metal oxide, **characterized in that** the water-spreading layer b2) is composed to an extent of more than 90% by weight of silicon dioxide and/or a metal oxide,
the mixture has
b31) from 2 to 15% of titanium dioxide and
b32) from 85 to 98% of silicon dioxide and/or of a metal oxide which is not soluble in water or of an anionically modified silicon dioxide or metal oxide;
based on the solids content of the mixture in percent by weight; and
the particulate titanium dioxide has an average primary-particle size smaller than 10 nm, where to determine the average particle size, titanium dioxide particles are scanned by an electron microscope (EM) and the average primary-particle size of the titanium dioxide is determined as numeric average from measurements of the length of 100 different randomly selected primary particles.

2. Plastics material according to Claim 1,
**characterized in that**
the adhesion-promoter layer b1) is obtainable through application and drying of an organic polymer material which is not soluble in water and which is in essence not swellable in water, and which is soluble in organic solvents and which comprises polar groups; and
the water-spreading layer b2) is obtainable through application and drying of an inorganic colloid sol;
or
**in that** the sol-adhesion-promoter layer b1+2) is obtainable by applying, to the substrate a), an inorganic colloid sol admixed with an adhesion promoter which is preferably an aqueous radiation-curable PU-acrylate dispersion, and drying and/or curing said sol.

3. Plastics material according to Claim 1 or 2,
**characterized in that**
the proportion of the rutile form in the titanium dioxide is at most 50% by weight.

4. Plastics material according to any of Claims 1 to 3,
**characterized in that**
the layers b2), b1+2), and b32) comprise silicon dioxide with the same properties.

5. Plastics material according to any of Claims 1 to 4,
**characterized in that**
the thickness of the adhesion-promoter layer b1) is in the range from 0.01 to 2 µm;
the thickness of the water-spreading layer b2) is in the range from 0.05 to 2 µm; and
the thickness of the photocatalytically active layer b3) is in the range from 0.01 to 1 µm; where
the total thickness of the layers b2) and b3) is not greater than 2 µm,
or **in that**
the thickness of the sol-adhesion-promoter layer, layer b1+2) is in the range from 1 to 50 µm;
and
the thickness of the photocatalytically active layer b3) is in the range from 0.01 to 1.0 µm; where
the total thickness of the layers b1+2) and b3) is not greater than 51 µm.

6. Plastics material according to any of the preceding claims,
**characterized in that**
the ratio of the thicknesses b3):b2) is in the range from 0.05 to 0.5.

7. Plastics material according to any of the preceding claims,
**characterized in that**,
above the photocatalytically active layer b3), it has a further water-soluble coating b4) and a protective film b5) peelably adhering thereto.

8. Process for the in-line production of a sheet-like plastics material according to at least one of Claims 1 to 7 with reduced tendency toward algal colonization on at least one surface, comprising the extrusion and in-line coating of a thermoplastic substrate, where, in succession,
A) a thermoplastic substrate is extruded as base; and then either
B) onto one surface of the extruded base, the temperature of which is from 40° to 70°C, a solution of an organic polymer material which is not soluble in water and which is in essence not swellable in water, and which is soluble in organic solvents and which comprises polar groups is applied, and is dried;
C) onto the dry layer B), the temperature of which is from 40° to 70°C, an aqueous solution of an inorganic colloid sol is applied, and is dried until residual moisture content is less than one percent by weight of water;
or
B1+2) onto one surface of the extruded base, the temperature of which is from 40° to 70°C, a mixture of an adhesion promoter and of an inorganic colloid sol is applied, and is dried and/or hardened,
**characterized in that**
D) onto the layer C) or B1 + 2), the temperature of each of which is from 40° to 70°C, and each of which optionally comprises residual moisture, an aqueous solution of a mixture comprising, based on the solids content of the mixture in percent by weight, from 2 to 15% of titanium dioxide and from 85 to 98% of silicon dioxide and/or of a metal oxide which is not soluble in water, or of an anionically modified silicon dioxide or metal oxide, is applied, and is dried;
where the titanium dioxide is in particle form and its average primary-particle size is smaller than 10 nm.

9. Process according to Claim 8, **characterized in that** the proportion of the rutile form in the titanium dioxide is at most 50% by weight.

10. Process according to Claim 8 or 9, **characterized in that** the layer applied in the step B) or B1+2) is applied and dried within from 30 to 120 seconds.

11. Process according to any of Claims 8 to 10, **characterized in that** the steps C) and, respectively, B1+2) and D) are carried out within a total of from 30 to 180 seconds.

12. Process according to any of Claims 8 to 11, **characterized in that** step D) is followed by a further step E) in which a water-soluble coating is applied, and also a peelable protective film adhering thereto.

13. Use of the plastics material according to Claims 1 to 7 or obtainable according to Claims 8 to 12 as roofing material and/or glazing material.

14. Use according to Claim 13 in areas with moist conditions.

## Revendications

1. Matériau en matière plastique plat revêtu à tendance réduite à la prolifération d'algues, comprenant :
a) en tant que corps de base, un substrat en matière plastique thermoplastique ; et
b) sur le corps de base, un revêtement photocatalytiquement actif comprenant :
- une couche dispersant l'eau, qui est
soit une couche de sol-promoteur d'adhésion b1+2) d'une épaisseur de couche de 1 µm à 50 µm, comprenant un promoteur d'adhésion et un sol colloïdal,
soit une couche de sol colloïdal b2) d'une épaisseur de couche de 0,05 µm à 2 µm, qui est disposée sur une couche de promoteur d'adhésion b1) appliquée sur le substrat a),
et
- une couche photocatalytiquement active b3) disposée sur la couche dispersant l'eau b1+2) ou b2), qui contient du dioxyde de titane et qui peut être obtenue par application et séchage d'un mélange qui comprend du dioxyde de titane et du dioxyde de silicium et/ou un oxyde métallique non soluble dans l'eau ou un dioxyde de silicium ou oxyde métallique modifié anioniquement,
**caractérisé en ce que**
la couche dispersant l'eau b2) est constituée de plus de 90 % en poids de dioxyde de silicium et/ou d'un oxyde métallique ;
le mélange comprend
b31) 2 à 15 % de dioxyde de titane et
b32) 85 à 98 % de dioxyde de silicium et/ou d'un oxyde métallique non soluble dans l'eau ou d'un dioxyde de silicium ou oxyde métallique modifié anioniquement ; par rapport à la fraction de solides du mélange en pourcentages en poids ; et
le dioxyde de titane particulaire a une taille de particule moyenne des particules primaires inférieure à 10 nm, les particules de dioxyde de titane étant balayées avec un microscope électronique (ME) pour la détermination de la taille de particule moyenne, et la taille de particule moyenne des particules primaires du dioxyde de titane étant déterminée en tant que moyenne en nombre de mesures de la longueur de 100 particules primaires différentes choisies aléatoirement.

2. Matériau en matière plastique selon la revendication 1, **caractérisé en ce que** la couche de promoteur d'adhésion b1) peut être obtenue par application et séchage d'un matériau polymère organique non soluble et essentiellement non gonflable dans l'eau, soluble dans les solvants organiques, ayant une teneur en groupes polaires ; et
la couche dispersant l'eau b2) peut être obtenue par application et séchage d'un sol colloïdal inorganique ; ou
**en ce que** la couche de sol-promoteur d'adhésion b1+2) peut être obtenue par mélange d'un sol colloïdal inorganique avec un promoteur d'adhésion, de préférence une dispersion aqueuse d'acrylate de PU durcissable par rayonnement, application sur le substrat a) et séchage et/ou durcissement.

3. Matériau en matière plastique selon la revendication 1 ou 2, **caractérisé en ce que** le dioxyde de titane présente une proportion de la forme rutile d'au plus 50 % en poids.

4. Matériau en matière plastique selon l'une quelconque des revendications 1 à 3, **caractérisé en ce que** les couches b2), b1+2) et b32) comprennent du dioxyde de silicium ayant les mêmes propriétés.

5. Matériau en matière plastique selon l'une quelconque des revendications 1 à 4, **caractérisé en ce que** la couche de promoteur d'adhésion b1) présente une épaisseur dans la couche allant de 0,01 à 2 µm ; la couche dispersant l'eau b2) présente une épaisseur dans la plage allant de 0,05 à 2 µm ; et la couche photocatalytiquement active b3) présente une épaisseur dans la plage allant de 0,01 à 1 µm ;
l'épaisseur totale des couches b2) et b3) n'étant pas supérieure à 2 µm,
ou **en ce que**
la couche de sol-promoteur d'adhésion b1+2) présente une épaisseur dans la plage allant de 1 à 50 µm ;
et
la couche photocatalytiquement active b3) présente une épaisseur dans la plage allant de 0,01 à 1,0 µm ; l'épaisseur totale des couches b1+2) et b3) n'étant pas supérieure à 51 µm.

6. Matériau en matière plastique selon l'une quelconque des revendications précédentes, **caractérisé en ce que** le rapport entre les épaisseurs de b3) et b2) se situe dans la plage allant de 0,05 à 0,5.

7. Matériau en matière plastique selon l'une quelconque des revendications précédentes, **caractérisé en ce qu'**il comprend sur la couche photocatalytiquement active b3) un revêtement soluble dans l'eau b4) supplémentaire et un film protecteur b5) adhérent de manière amovible sur celui-ci.

8. Procédé de fabrication en ligne d'un matériau plat en matière plastique selon au moins l'une quelconque des revendications 1 à 7 ayant une tendance à la prolifération d'algues réduite sur au moins une surface, comprenant l'extrusion et le revêtement en ligne d'un substrat en matière plastique thermoplastique, selon lequel, successivement,
A) un substrat en matière plastique thermoplastique est extrudé en tant que corps de base ;
puis
B) une solution d'un matériau polymère organique non soluble et essentiellement non gonflable dans l'eau, soluble dans les solvants organiques, ayant une teneur en groupes polaires, est appliquée sur une surface du corps de base extrudé chauffé à 40 à 70 °C, et séchée ;
C) une solution aqueuse d'un sol colloïdal inorganique est appliquée sur la couche B) séchée chauffée à 40 à 70 °C, et séchée jusqu'à une teneur en humidité résiduelle inférieure à un pour cent en poids d'eau ;
ou
B1+2) un mélange d'un promoteur d'adhésion et d'un sol colloïdal inorganique est appliqué sur une surface du corps de base extrudé chauffé à 40 à 70 °C, et séché et/ou durci,
**caractérisé en ce que**
D) une solution aqueuse d'un mélange comprenant, par rapport à la fraction de solides du mélange en pourcentage en poids, 2 à 15 % de dioxyde de titane et 85 à 98 % de dioxyde de silicium et/ou d'un oxyde métallique non soluble dans l'eau ou d'un dioxyde de silicium ou d'un oxyde métallique modifié anioniquement, est appliquée sur la couche C) ou B1+2) chauffée à 40 à 70 °C, contenant éventuellement une humidité résiduelle, et séchée ;
le dioxyde de titane se présentant sous forme particulaire et présentant une taille de particule moyenne des particules primaires inférieure à 10 nm.

9. Procédé selon la revendication 8, **caractérisé en ce que** le dioxyde de titane présente une proportion de la forme rutile d'au plus 50 % en poids.

10. Procédé selon la revendication 8 ou 9, **caractérisé en ce que** la couche appliquée à l'étape B) ou B1+2) est appliquée en 30 à 120 secondes et séchée.

11. Procédé selon l'une quelconque des revendications 8 à 10, **caractérisé en ce que** les étapes C) ou B1+2) et D) sont réalisées au total en 30 à 180 secondes.

12. Procédé selon l'une quelconque des revendications 8 à 11, **caractérisé en ce qu'**après l'étape D), un revêtement soluble dans l'eau est appliqué lors d'une étape E) supplémentaire, ainsi qu'un film protecteur adhérent de manière amovible sur celui-ci.

13. Utilisation du matériau en matière plastique selon les revendications 1 à 7 ou pouvant être obtenu selon les revendications 8 à 12 en tant que matériau de couverture et/ou de vitrage.

14. Utilisation selon la revendication 13 dans des locaux humides.
